# EUROPEAN PATENT APPLICATION

(11) **EP 4 141 773 A1**
(43) Date of publication of application: **01.03.2023**
(21) Application number: 20931871.6
(22) Date of filing: 24.04.2020
(51) Int. Cl.: G06Q 30/06, G06F 9/46

(54) **CONTROL METHOD, CONTROL PROGRAM, AND CONTROL DEVICE**

(71) Applicant: FUJITSU LIMITED, Kawasaki-shi, Kanagawa 211-8588 (JP)
(72) Inventor: YONEKURA, Yuki, Kawasaki-shi, Kanagawa 211-8588 (JP); FUJIMOTO, Shingo, Kawasaki-shi, Kanagawa 211-8588 (JP); MORINAGA, Masanobu, Kawasaki-shi, Kanagawa 211-8588 (JP)
(74) Representative: Hoffmann Eitle
(86) International application number: PCT/JP2020/017744
(87) International publication number: WO 2021/214992

(57) **Abstract**

A BC network (100) includes a first node (110) and a second node (120). The first node (110) has logic (111) of first processing and stores a BC (112). The second node (120) does not have the logic (111) of the first processing, has logic (121) of second processing, and stores a BC (122). The first node (110) executes the first processing on the basis of the logic (111) of the first processing. When executing the first processing, the first node (110) records a block including information indicating that the first processing has been executed in the BCs (112, 122).

## Description

### FIELD

The present invention relates to a control method, a control program, and a control apparatus.

### BACKGROUND

Conventionally, logic for generating a transaction is deployed on a node included in a blockchain network. The blockchain networks are roughly classified into a public type, a consortium type, and a private type. The logic is called, for example, a smart contract. For example, the same smart contract tends to be deployed on each node included in the blockchain network.

As a prior art, for example, there is a technology in which a result of verification of a smart contract, which includes a predetermined value for evaluation specified by a node and an output value obtained in a case where the predetermined value is input to the smart contract, is included and managed in an evaluation execution transaction for the smart contract.

### SUMMARY

### TECHNICAL PROBLEM

Here, it may be desired to deploy different types of logic of processing to a plurality of nodes included in a blockchain network so as to make a state where the logic is not shared among the nodes. However, in the prior art, in the case of making the state where the logic is not shared among the nodes, there is a problem that it is not possible to verify order of a plurality of types of processing executed at different nodes at each node.

In one aspect, it is an object of the present invention to enable verification of order of a plurality of types of processing executed at different nodes in a state where logic of processing is not shared among the nodes.

### SOLUTION TO PROBLEM

According to one embodiment, there is proposed a control method implemented by a first node in a blockchain network, the blockchain network including the first node that stores logic of processing and a second node that does not store the logic of the processing, the control method including: executing the processing on the basis of the logic of the processing; and when the processing is executed, recording, in a blockchain managed by the blockchain network, a block that includes information that indicates that the processing has been executed.

### ADVANTAGEOUS EFFECTS OF INVENTION

According to an aspect, it is possible to verify order of a plurality of types of processing executed at different nodes in a state where logic of processing is not shared among the nodes.

### BRIEF DESCRIPTION OF DRAWINGS

FIG. 1 is an explanatory diagram illustrating an example of a control method according to an embodiment.
FIG. 2 is an explanatory diagram illustrating an example of a BC management system 200.
FIG. 3 is a block diagram illustrating a hardware configuration example of a node terminal 201.
FIG. 4 is an explanatory diagram illustrating an example of content stored in an evidence data 400.
FIG. 5 is an explanatory diagram illustrating an example of content stored in an agreement policy reference table 500.
FIG. 6 is an explanatory diagram illustrating an example of content stored in an evidence reference table 600.
FIG. 7 is a block diagram illustrating a hardware configuration example of a leader terminal 202.
FIG. 8 is a block diagram illustrating a hardware configuration example of an execution terminal 203.
FIG. 9 is a block diagram illustrating a functional configuration example of the BC management system 200.
FIG. 10 is an explanatory diagram (part 1) illustrating a flow of operation of the BC management system 200.
FIG. 11 is an explanatory diagram (part 2) illustrating the flow of the operation of the BC management system 200.
FIG. 12 is an explanatory diagram (part 1) illustrating an operation example of the BC management system 200.
FIG. 13 is an explanatory diagram (part 2) illustrating the operation example of the BC management system 200.
FIG. 14 is an explanatory diagram (part 3) illustrating the operation example of the BC management system 200.
FIG. 15 is an explanatory diagram (part 1) illustrating a specific configuration example of the BC management system 200.
FIG. 16 is an explanatory diagram (part 2) illustrating the specific configuration example of the BC management system 200.
FIG. 17 is an explanatory diagram (part 3) illustrating the specific configuration example of the BC management system 200.
FIG. 18 is an explanatory diagram (part 4) illustrating the specific configuration example of the BC management system 200.
FIG. 19 is a flowchart illustrating an example of a deployment processing procedure.
FIG. 20 is a flowchart (part 1) illustrating an example of a verification processing procedure.
FIG. 21 is a flowchart (part 2) illustrating an example of the verification processing procedure.
FIG. 22 is a flowchart (part 3) illustrating an example of the verification processing procedure.

### DESCRIPTION OF EMBODIMENTS

Hereinafter, an embodiment of a control method, a control program, and a control apparatus according to the present invention will be described in detail with reference to the drawings.

### (Example of Control method According to Embodiment)

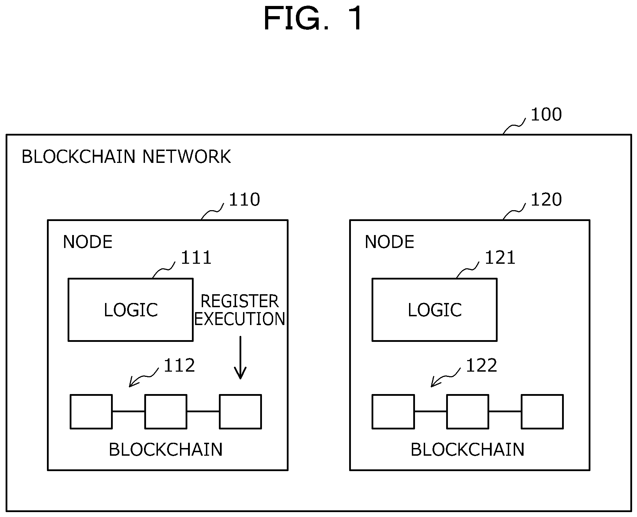

FIG. 1 is an explanatory diagram illustrating an example of the control method according to the embodiment. The control apparatus is a computer that is a node included in a blockchain network. In the following description, a blockchain may be referred to as "BC".

The BC network forms a BC management system that manages a BC. The BC network includes a plurality of nodes. For example, the BC is managed by each node included in the BC network storing and monitoring the same BC.

The BC is a list that is a distributed ledger that manages transaction information by coupling blocks in which the transaction information is registered. The transaction information is called, for example, a transaction (Tx). In the following description, the transaction may be referred to as "Tx". The BC implements, for example, a distributed ledger technology in which it is difficult to falsify transaction information registered in a block.

As an example of the BC network, there is a public type, consortium type, or private type BC network. As an example of the consortium type BC network, there is a "Hyperledger Fabric" type BC network.

In the consortium type or private type BC network, logic called a smart contract that generates transaction information may be deployed on each node included in the BC network. The smart contract is a program for generating transaction information on a node. In the following description, the smart contract may be referred to as "SC". The transaction information is generated by a node executing a smart contract deployed on the own node.

Conventionally, the same smart contract tends to be deployed on each node included in the consortium type BC network, and the same smart contract is shared between the nodes. Then, each node included in the consortium type BC network executes the same smart contract, and generates transaction information.

On the other hand, in a general consortium in which a plurality of companies and the like cooperate as parties, there is a case where each party has its own logic and it is requested to guarantee order of a plurality of types of processing executed by different parties without sharing logic with other parties.

Specifically, a case may be considered where a party A included in a consortium has logic for verifying that a source of remittance and a destination of remittance are included in a blacklist, and a party B included in the same consortium have logic for remitting money specified by the source of remittance to the destination of remittance. In this case, it may be requested to guarantee order of processing so that the party B executes processing of remitting the money specified by the source of remittance to the destination of remittance after the party A executes processing of verifying that the source of remittance and the destination of remittance are included in the blacklist. Here, since the party A and the party B do not share the logic, for example, the party B is not able to refer to the blacklist.

However, conventionally, it has been difficult to implement the request to guarantee order of a plurality of types of processing executed by different parties without sharing logic among the parties by the consortium type BC network. For example, when different smart contracts are deployed on different node groups in the BC network, it is difficult to enable verification of order of the smart contracts at any node without sharing the smart contracts between the node groups.

Specifically, in the BC network, information indicating a result of execution of a smart contract stored in the BC is stored in a data format that is difficult to interpret except for a node group on which the smart contract is deployed. "Difficult to interpret" means that encryption is performed and decryption is difficult. Therefore, it is difficult to enable verification of the order of the smart contracts at any node without sharing the smart contracts between the node groups.

On the other hand, a method of preparing an application for verifying order of smart contracts outside the consortium type BC network may be considered. In this method, it is not possible to enable verification of the order of the smart contracts at any node, and to guarantee the order of the smart contracts in a decentralized manner.

Therefore, in the present embodiment, a control method capable of enabling verification of order of a plurality of types of processing executed at different nodes at any node in a state where logic of processing is not shared between specific nodes will be described. According to this control method, it is possible to enable guarantee of the order of the plurality of types of processing executed at the different nodes in a decentralized manner.

In the example of FIG. 1, a BC network 100 includes a first node 110 and a second node 120. The first node 110 corresponds to, for example, the control apparatus described above.

The first node 110 has logic 111 of first processing and stores a BC 112. The logic 111 is a program that defines a procedure of the first processing. The second node 120 has logic 121 of second processing and stores a BC 122. The logic 121 is a program that defines a procedure of the second processing. The BC 112 and the BC 122 are updated to have the same content in a timely manner.

In FIG. 1, the first node 110 executes the first processing on the basis of the logic 111 of the first processing. Then, when executing the first processing, the first node 110 records a block including information indicating that the first processing has been executed in the BCs 112 and 122. The information indicating that the first processing has been executed is, for example, in a data format interpretable by the second node 120. "Interpretable" means that the second node 120 may handle content of the information. The data format interpretable by the second node 120 is, for example, plaintext or ciphertext that may be decrypted by the second node 120.

For example, the first node 110 causes a third node (not illustrated) that generates a block to generate the block including the information indicating that the first processing has been executed, and causes the first node 110 and the second node 120 to distribute the generated block. The first node 110 records the received block in the BC 112. The second node 120 records the received block in the BC 122.

With this configuration, the first node 110 may control the BC network 100 so that the block including the information indicating that the first processing has been executed in the data format interpretable by the second node 120 is recorded in the BCs 112 and 122. In this way, the first node 110 may enable the second node 120 to confirm the information indicating that the first processing has been executed without sharing the logic 111 of the first processing with the second node 120.

Therefore, when the second node 120 executes the second processing on the basis of the logic 121 of the second processing, the first node 110 may enable verification of order of the first processing and the second processing at the second node 120. Furthermore, when the second node 120 executes the second processing on the basis of the logic 121 of the second processing, the first node 110 may enable verification of the order of the first processing and the second processing also at the first node 110.

As a result, it is possible for the BC network 100 to enable verification of order of a plurality of types of processing executed at different nodes at any node in a state where logic of processing is not shared between specific nodes. The BC network 100 may be implemented as, for example, a consortium type.

### (Example of BC Management System 200)

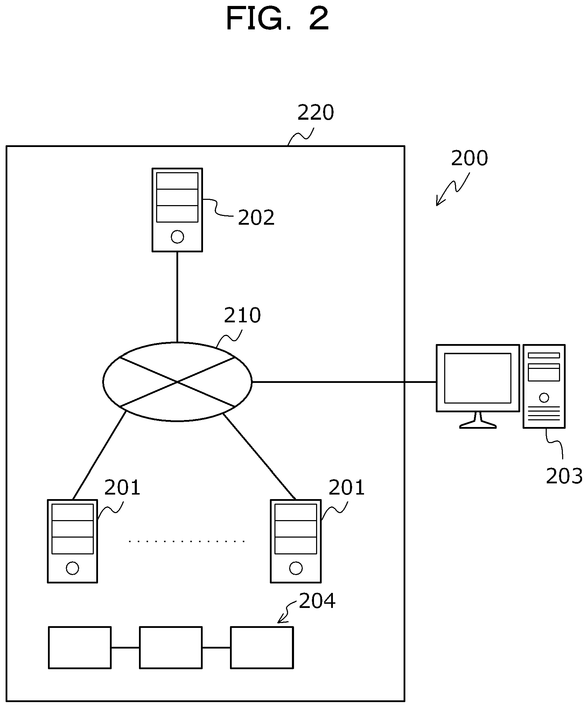

Next, an example of a BC management system 200 to which the control apparatus described above is applied will be described with reference to FIG. 2.

FIG. 2 is an explanatory diagram illustrating an example of the BC management system 200. In FIG. 2, the BC management system 200 includes a plurality of node terminals 201, one or more leader terminals 202, and one or more execution terminals 203.

In the BC management system 200, the node terminals 201 and the leader terminal 202 are connected via a wired or wireless network 210. The network 210 is, for example, a local area network (LAN), a wide area network (WAN), or the Internet. Furthermore, the node terminals 201 and the execution terminal 203 are connected via the wired or wireless network 210.

The BC management system 200 is a Hyperledger Fabric type.

Each node terminal 201 is a computer that stores the same BC 204. Any one of the node terminals 201 has a smart contract that defines a procedure of predetermined processing. Any one of the node terminals 201 executes the smart contract in response to a request from the execution terminal 203, and performs the predetermined processing by the smart contract. The predetermined processing is, for example, processing of generating transaction information. The smart contract is, for example, a program.

Each node terminal 201 has a verification smart contract that defines a procedure of processing of verifying order. Each node terminal 201 executes the verification smart contract in response to a request from the leader terminal 202, and performs processing of verifying order of a plurality of smart contracts. Each node terminal 201 transmits information indicating a result of the verification to the leader terminal 202.

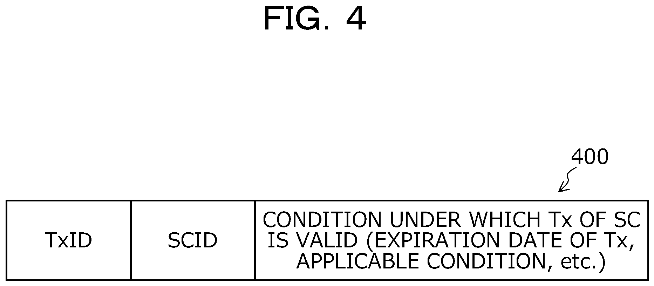

When executing the smart contract, any one of the node terminals 201 generates information indicating that the smart contract has been executed, information indicating a result of executing the smart contract, or the like. The information indicating that the smart contract has been executed is, for example, evidence data 400 described later in FIG. 4. Any one of the node terminals 201 transmits, to the leader terminal 202, a generation request of a block including the information indicating that the smart contract has been executed, the information indicating the result of executing the smart contract, or the like.

Each node terminal 201 receives a block to be added to the BC 204 from the leader terminal 202. Each node terminal 201 adds the received block to the BC 204 stored in the own terminal. Furthermore, the received block may include information indicating a result of verification of each node terminal 201. In this case, each node terminal 201 may determine whether or not to add the received block to the BC 204 stored in the own terminal, on the basis of the information indicating the result of verification of each node terminal 201.

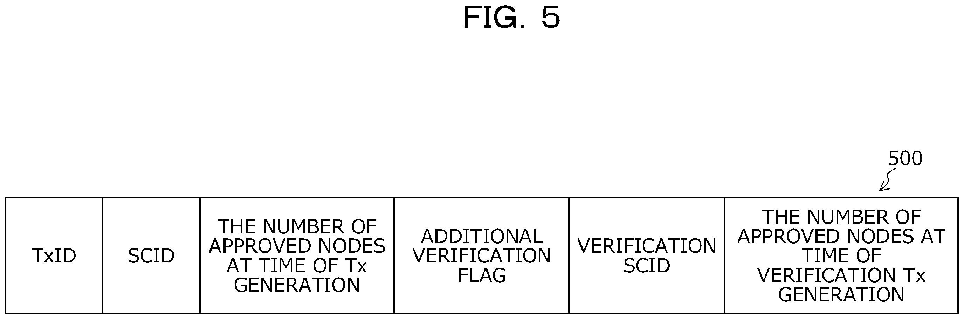

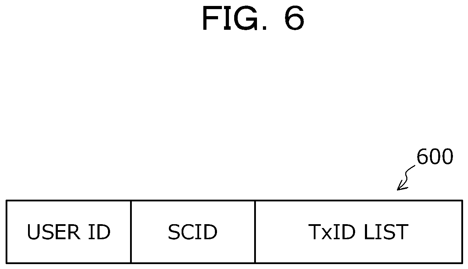

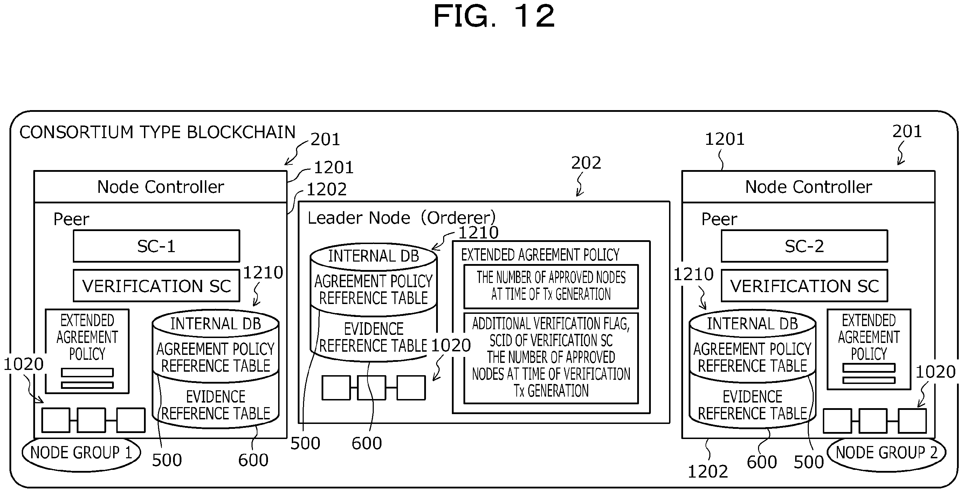

The node terminal 201 may operate as the control apparatus described above. The node terminal 201 is an element forming a BC infrastructure 220. Specifically, the node terminal 201 has various tables described later in FIGs. 5 and 6, and performs various types of operation as in operation examples described later in FIGs. 12 to 14. The node terminal 201 is, for example, a server or a personal computer (PC).

The leader terminal 202 is a computer that generates a block to be added to the BC 204. The leader terminal 202 may store the BC 204. The leader terminal 202 does not have to store the BC 204. The leader terminal 202 receives, from any one of the node terminals 201, a generation request of a block including information indicating that a smart contract has been executed, information indicating a result of executing the smart contract, or the like. In response to the generation request, the leader terminal 202 generates the block including the information indicating that the smart contract has been executed, the information indicating the result of executing the smart contract, or the like.

Furthermore, in response to the generation request, the leader terminal 202 transmits a request for executing a verification smart contract to each node terminal 201, and receives information indicating a result of verification from each node terminal 201. On the basis of the information indicating the result of verification, the leader terminal 202 determines whether or not to generate the block including the information indicating that the smart contract has been executed, the information indicating the result of executing the smart contract, or the like. In a case where it is determined to generate the block, the leader terminal 202 generates the block including the information indicating that the smart contract has been executed, the information indicating the result of executing the smart contract, or the like, and the information indicating the result of verification.

The leader terminal 202 distributes the generated block to each node terminal 201, so that the generated block is added to the BC 204 stored in each node terminal 201. The leader terminal 202 adds the generated block to the BC 204 stored in the own terminal.

Specifically, the leader terminal 202 has various tables described later in FIGs. 5 and 6, and performs various types of operation as in the operation examples described later in FIGs. 12 to 14. The leader terminal 202 is an element forming the BC infrastructure 220. The leader terminal 202 is, for example, a server or a PC.

The execution terminal 203 is a computer that transmits a request for executing a smart contract to the node terminal 201 having the smart contract. The execution terminal 203 is, for example, a server, a PC, a tablet terminal, or a smartphone.

Here, the case has been described where the node terminal 201 and the leader terminal 202 are different devices, but the present invention is not limited to this. For example, any one of the node terminals 201 may be integrated with the leader terminal 202.

Furthermore, here, the case has been described where the node terminal 201 and the execution terminal 203 are different devices, but the present invention is not limited to this. For example, any one of the node terminals 201 may be integrated with the execution terminal 203.

Furthermore, here, the case has been described where the leader terminal 202 and the execution terminal 203 are different devices, but the present invention is not limited to this. For example, the leader terminal 202 may be integrated with the execution terminal 203.

### (Hardware Configuration Example of Node Terminal 201)

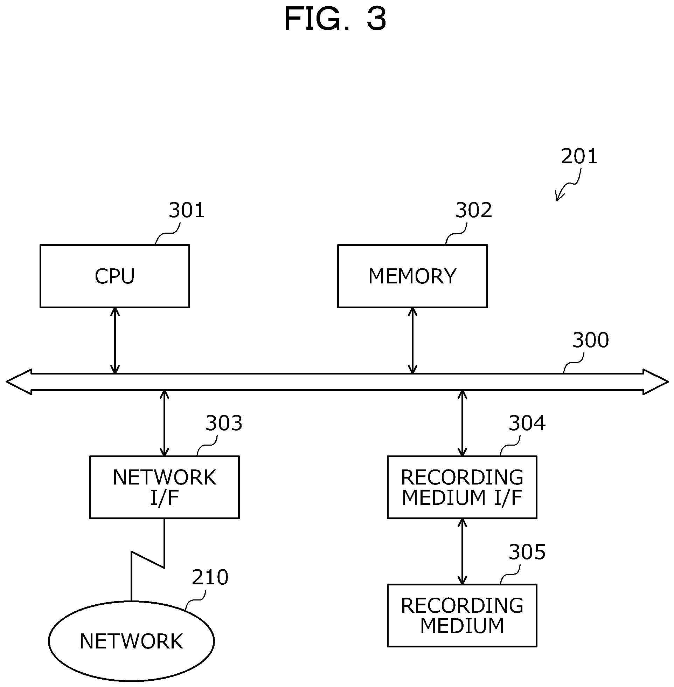

Next, a hardware configuration example of the node terminal 201 will be described with reference to FIG. 3.

FIG. 3 is a block diagram illustrating the hardware configuration example of the node terminal 201. In FIG. 3, the node terminal 201 includes a central processing unit (CPU) 301, a memory 302, a network interface (I/F) 303, a recording medium I/F 304, and a recording medium 305. Furthermore, the individual components are connected to each other by a bus 300.

Here, the CPU 301 performs overall control of the node terminal 201. The memory 302 includes, for example, a read only memory (ROM), a random access memory (RAM), and a flash ROM. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is connected to the network 210 through a communication line, and is connected to another computer via the network 210. Additionally, the network I/F 303 manages an interface between the network 210 and the inside, and controls input and output of data from another computer. The network I/F 303 is, for example, a modem or a LAN adapter.

The recording medium I/F 304 controls reading and writing of data from and to the recording medium 305 under the control of the CPU 301. The recording medium I/F 304 is, for example, a disk drive, a solid state drive (SSD), or a universal serial bus (USB) port. The recording medium 305 is a nonvolatile memory that stores data written under the control of the recording medium I/F 304. The recording medium 305 is, for example, a disk, a semiconductor memory, or a USB memory. The recording medium 305 may be attachable to and detachable from the node terminal 201.

The node terminal 201 may include, for example, a keyboard, a mouse, a display, a printer, a scanner, a microphone, or a speaker in addition to the components described above. Furthermore, the node terminal 201 may include a plurality of the recording medium I/Fs 304 or a plurality of the recording media 305. Furthermore, the node terminal 201 does not have to include the recording medium I/F 304 or the recording medium 305.

### (Content Stored In Evidence Data 400)

Next, an example of content stored in the evidence data 400 will be described with reference to FIG. 4. The evidence data 400 is implemented by, for example, a storage area such as the memory 302 or the recording medium 305 of the node terminal 201 illustrated in FIG. 3.

FIG. 4 is an explanatory diagram illustrating an example of the content stored in the evidence data 400. As illustrated in FIG. 4, the evidence data 400 has fields of a TxID, a SCID, and a condition under which a Tx of a SC is valid. The evidence data 400 is stored as a record by setting information in each field.

In the field of the TxID, a TxID that identifies a Tx of a SC generated by the SC is set. In the field of the SCID, a SCID that identifies a SC is set. In the field of the condition under which a Tx of a SC is valid, a condition under which the Tx of the SC generated by the SC is valid is set. The condition includes, for example, an expiration date of the Tx of the SC.

### (Content stored in Agreement Policy Reference Table 500)

Next, an example of content stored in an agreement policy reference table 500 will be described with reference to FIG. 5. The agreement policy reference table 500 is implemented by, for example, a storage area such as the memory 302 or the recording medium 305 of the node terminal 201 illustrated in FIG. 3.

FIG. 5 is an explanatory diagram illustrating an example of the content stored in the agreement policy reference table 500. As illustrated in FIG. 5, the agreement policy reference table 500 has fields of a TxID, a SCID, the number of approved nodes at the time of Tx generation, an additional verification flag, a verification SCID, and the number of approved nodes at the time of verification Tx generation. In the agreement policy reference table 500, agreement policy information is stored as a record by setting information in each field for each Tx.

In the field of the TxID, a TxID that identifies a Tx when a SC is deployed is set. In the field of the SCID, a SCID that identifies a SC is set. In the field of the number of approved nodes at the time of Tx generation, a criterion of at least how many approved nodes indicating the number of node terminals 201 generating a Tx of the same SC are needed among the node terminals 201 on which the SC is deployed in order to determine that a block including a Tx of a SC is to be generated is set. The criterion is a threshold for the number of approved nodes.

In the field of the additional verification flag, an additional verification flag indicating whether or not to execute a verification SC is set. In the field of the verification SCID, a verification SCID that identifies a verification SC is set. In the field of the number of approved nodes at the time of verification Tx generation, a criterion of at least how many approved nodes indicating the number of node terminals 201 generating the same verification Tx are needed in the BC management system 200 in order to determine that a block including a verification Tx is to be generated is set. As the criterion, a threshold for the number of approved nodes is set.

### (Content Stored in Evidence Reference Table 600)

Next, an example of content stored in an evidence reference table 600 will be described with reference to FIG. 6. The evidence reference table 600 is implemented by, for example, a storage area such as the memory 302 or the recording medium 305 of the node terminal 201 illustrated in FIG. 3.

FIG. 6 is an explanatory diagram illustrating an example of the content stored in the evidence reference table 600. As illustrated in FIG. 6, the evidence reference table 600 has fields of a user ID, a SCID, and a TxID list. In the evidence reference table 600, evidence reference information is stored as a record by setting information in each field for each SC.

In the field of the user ID, a user ID that identifies a user who has requested execution of a SC is set. In the field of the SCID, a SCID that identifies a SC is set. In the field of the TxID list, a TxID that identifies a Tx of a SC is set.

### (Hardware Configuration Example of Leader Terminal 202)

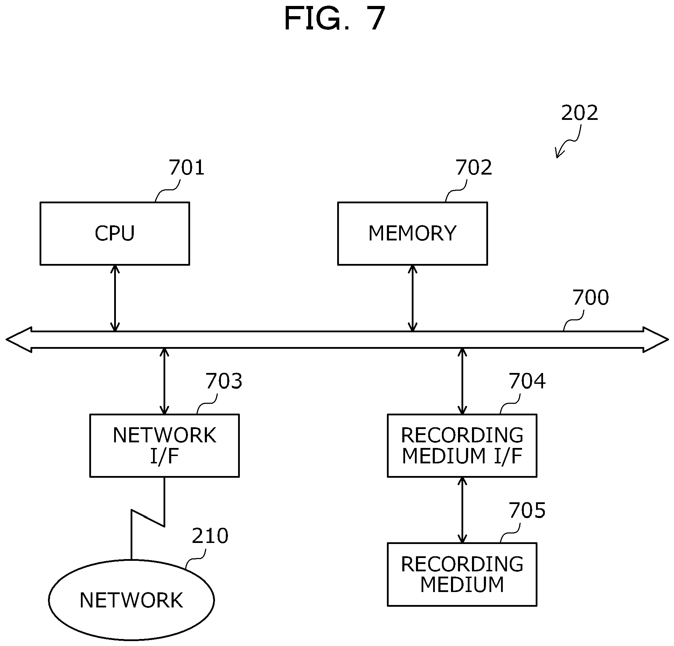

Next, a hardware configuration example of the leader terminal 202 will be described with reference to FIG. 7.

FIG. 7 is a block diagram illustrating the hardware configuration example of the leader terminal 202. In FIG. 7, the leader terminal 202 includes a central processing unit (CPU) 701, a memory 702, a network interface (I/F) 703, a recording medium I/F 704, and a recording medium 705. Furthermore, the individual components are connected to each other by a bus 700.

Here, the CPU 701 performs overall control of the leader terminal 202. The memory 702 includes, for example, a read only memory (ROM), a random access memory (RAM), and a flash ROM. Specifically, for example, the flash ROM or the ROM stores various programs, and the RAM is used as a work area for the CPU 701. The programs stored in the memory 702 are loaded into the CPU 701 to cause the CPU 701 to execute coded processing.

The network I/F 703 is connected to the network 210 through a communication line, and is connected to another computer via the network 210. Additionally, the network I/F 703 manages an interface between the network 210 and the inside, and controls input and output of data from another computer. The network I/F 703 is, for example, a modem or a LAN adapter.

The recording medium I/F 704 controls reading and writing of data from and to the recording medium 705 under the control of the CPU 701. The recording medium I/F 704 is, for example, a disk drive, a solid state drive (SSD), or a universal serial bus (USB) port. The recording medium 705 is a nonvolatile memory that stores data written under the control of the recording medium I/F 704. The recording medium 705 is, for example, a disk, a semiconductor memory, or a USB memory. The recording medium 705 may be attachable to and detachable from the leader terminal 202.

The leader terminal 202 may include, for example, a keyboard, a mouse, a display, a printer, a scanner, a microphone, or a speaker in addition to the components described above. Furthermore, the leader terminal 202 may include a plurality of the recording medium I/Fs 704 or a plurality of the recording media 705. Furthermore, the leader terminal 202 does not have to include the recording medium I/F 704 or the recording medium 705.

### (Hardware Configuration Example of Execution Terminal 203)

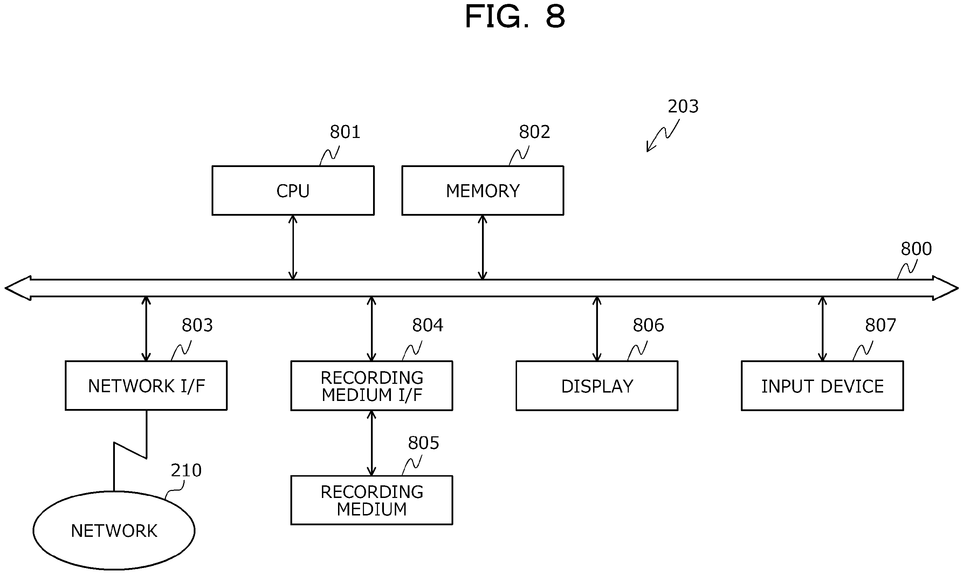

Next, a hardware configuration example of the execution terminal 203 included in the BC management system 200 illustrated in FIG. 2 will be described with reference to FIG. 8.

FIG. 8 is a block diagram illustrating the hardware configuration example of the execution terminal 203. In FIG. 8, the execution terminal 203 includes a CPU 801, a memory 802, a network I/F 803, a recording medium I/F 804, a recording medium 805, a display 806, and an input device 807. Furthermore, the individual components are connected to each other by a bus 800.

Here, the CPU 801 performs overall control of the execution terminal 203. The memory 802 includes, for example, a ROM, a RAM, and a flash ROM. Specifically, for example, the flash ROM or the ROM stores various programs, and the RAM is used as a work area for the CPU 801. The programs stored in the memory 802 are loaded into the CPU 801 to cause the CPU 801 to execute coded processing.

The network I/F 803 is connected to the network 210 through a communication line, and is connected to another computer via the network 210. Then, the network I/F 803 manages an interface between the network 210 and the inside, and controls input and output of data from another computer. The network I/F 803 is, for example, a modem or a LAN adapter.

The recording medium I/F 804 controls reading and writing of data from and to the recording medium 805 under the control of the CPU 801. The recording medium I/F 804 is, for example, a disk drive, an SSD, or a USB port. The recording medium 805 is a nonvolatile memory that stores data written under the control of the recording medium I/F 804. The recording medium 805 is, for example, a disk, a semiconductor memory, or a USB memory. The recording medium 805 may be attachable to and detachable from the execution terminal 203.

The display 806 displays data such as a document, an image, and function information, as well as a cursor, an icon, or a tool box. The display 806 is, for example, a cathode ray tube (CRT), a liquid crystal display, or an organic electroluminescence (EL) display. The input device 807 has keys for inputting characters, numbers, various instructions, and the like, and inputs data. The input device 807 may be a keyboard, a mouse, or the like, or may be a touchpanel input pad, a numeric keypad, or the like.

The execution terminal 203 may include, for example, a printer, a scanner, a microphone, or a speaker in addition to the components described above. Furthermore, the execution terminal 203 may include a plurality of the recording medium I/Fs 804 or a plurality of the recording media 805. Furthermore, the execution terminal 203 does not have to include the recording medium I/F 804 or the recording medium 805.

### (Functional Configuration Example of BC Management System 200)

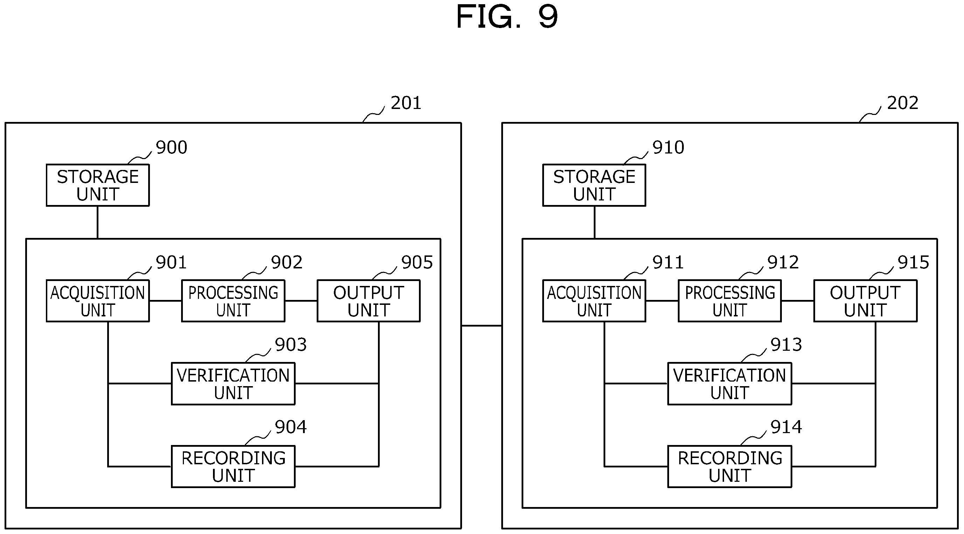

Next, a functional configuration example of the BC management system 200 will be described with reference to FIG. 9.

FIG. 9 is a block diagram illustrating the functional configuration example of the BC management system 200. In the BC management system 200, the node terminal 201 includes a storage unit 900, an acquisition unit 901, a processing unit 902, a verification unit 903, a recording unit 904, and an output unit 905.

In the BC management system 200, the node terminal 201 operates as a first node that stores logic of the first processing or a second node that does not store the logic of the first processing and stores logic of the second processing desired to be executed after the first processing.

The storage unit 900 is implemented by, for example, a storage area such as the memory 302 or the recording medium 305 illustrated in FIG. 3. Hereinafter, a case will be described where the storage unit 900 is included in the node terminal 201, but the present invention is not limited to this. For example, the storage unit 900 may be included in a device different from the node terminal 201, and content stored in the storage unit 900 may be able to be referred to by the node terminal 201.

The acquisition unit 901 to the output unit 905 function as an example of a control unit. Specifically, for example, the acquisition unit 901 to the output unit 905 implement functions thereof by causing the CPU 301 to execute a program stored in a storage area such as the memory 302 or the recording medium 305 illustrated in FIG. 3 or by the network I/F 303. A processing result of each functional unit is stored in, for example, a storage area such as the memory 302 or the recording medium 305 illustrated in FIG. 3.

The storage unit 900 stores various types of information referred to or updated in processing of each functional unit. The storage unit 900 stores a BC. The storage unit 900 stores the logic of the first processing or the logic of the second processing. The first processing is processing related to a transaction. The second processing is processing related to the transaction. The second processing is desired to be executed after the first processing. The logic is a program that indicates a procedure of the processing. The logic is, for example, a SC. The logic of the first processing is, for example, a first SC. The logic of the second processing is, for example, a second SC.

The acquisition unit 901 acquires various types of information to be used for processing of each functional unit. The acquisition unit 901 stores the acquired various types of information in the storage unit 900, or outputs the acquired various types of information to each functional unit. Furthermore, the acquisition unit 901 may output the various types of information stored in the storage unit 900 to each functional unit. The acquisition unit 901 acquires the various types of information on the basis of, for example, operation input by a user. The acquisition unit 901 may receive the various types of information from, for example, a device different from the node terminal 201.

The acquisition unit 901 acquires a request for executing the first processing or the second processing. The acquisition unit 901 acquires the request for executing the first processing or the second processing by, for example, receiving the request from the execution terminal 203. Specifically, the acquisition unit 901 acquires a request for executing a SC by receiving the request from the execution terminal 203.

The acquisition unit 901 acquires a request for verifying correctness of execution of the second processing. The acquisition unit 901 acquires, for example, a request for determining whether or not the first processing has already been executed. Specifically, the acquisition unit 901 acquires the request for determining whether or not the first processing has already been executed by receiving the request from the leader terminal 202.

The acquisition unit 901 may accept a start trigger to start processing of any one of the functional units. The start trigger is, for example, predetermined operation input by a user. The start trigger may be, for example, reception of predetermined information from another computer. The start trigger may be, for example, output of predetermined information by any one of the functional units. The acquisition unit 901 may accept, for example, acquisition of various requests as a start trigger to start processing of the processing unit 902, the verification unit 903, or the recording unit 904.

The processing unit 902 executes the first processing on the basis of the logic of the first processing. The processing unit 902 executes the first processing on the basis of the logic of the first processing in response to, for example, a request for executing the first processing. Specifically, the processing unit 902 executes the first SC in response to a request for executing the first SC.

The processing unit 902 executes the second processing on the basis of the logic of the second processing. The processing unit 902 executes the second processing on the basis of the logic of the second processing in response to, for example, a request for executing the second processing. Specifically, the processing unit 902 executes the second SC in response to a request for executing the second SC.

The recording unit 904 records, when executing the first processing, a block including information indicating that the first processing has been executed in a BC stored in the storage unit 900 of the own terminal. The block includes the information indicating that the first processing has been executed in, for example, a data format interpretable by each node terminal 201. The recording unit 904 receives, for example, the block including information indicating that the first processing has been executed, which is distributed from the leader terminal 202 operating as the third node, and records the block in the BC stored in the storage unit 900 of the own terminal. With this configuration, thereafter, the recording unit 904 may enable reference to the information indicating that the first processing has been executed, and enable verification of the order of the first processing and the second processing.

The recording unit 904 records, only in a case where the first processing has already been executed when the second processing is executed, a block including information indicating a result of executing the second processing in the BC stored in the storage unit 900 of the own terminal. The recording unit 904 receives, for example, the block including information indicating the result of executing the second processing, which is distributed from the leader terminal 202 operating as the third node, and records the block in the BC stored in the storage unit 900 of the own terminal. With this configuration, the recording unit 904 may record the block in the BC only in a case where the order of the first processing and the second processing is guaranteed.

The verification unit 903 verifies correctness of execution of the second processing when receiving a request for verifying the correctness of execution of the second processing. For example, when receiving a request for determining whether or not the first processing has already been executed, the verification unit 903 determines whether or not the first processing has already been executed, and generates information indicating a result of determining whether or not the first processing has already been executed. With this configuration, the verification unit 903 may verify the order of the first processing and the second processing on the own terminal.

The output unit 905 outputs a processing result of any one of the functional units. An output format is, for example, display on a display, print output to a printer, transmission to an external device by the network I/F 303, or storage in a storage area such as the memory 302 or the recording medium 305. With this configuration, the output unit 905 enables notification of the processing result of any one of the functional units to a user, and may improve convenience of the node terminal 201.

When the first processing is executed, the output unit 905 transmits information indicating that the first processing has been executed to the leader terminal 202 operating as the third node. The output unit 905 transmits, for example, a generation request of a block including the information indicating that the first processing has been executed to the leader terminal 202 operating as the third node. The generation request includes the information indicating that the first processing has been executed. Specifically, by transmitting the generation request, the output unit 905 causes the leader terminal 202 to generate the block and distribute the block to each node terminal 201, and causes each node terminal 201 to add the block to the BC stored in the node terminal 201. With this configuration, the output unit 905 may add the block including the information indicating that the first processing has been executed to the BC stored in each node terminal 201 of the BC management system 200.

When the second processing is executed, the output unit 905 transmits information indicating a result of executing the second processing to the third node. The output unit 905 transmits, for example, a generation request of a block including the information indicating the result of executing the second processing to the leader terminal 202 operating as the third node. The generation request includes the information indicating the result of executing the second processing. Specifically, by transmitting the generation request, the output unit 905 causes the leader terminal 202 to generate the block and distribute the block to each node terminal 201, and causes each node terminal 201 to add the block to the BC stored in the node terminal 201. With this configuration, the output unit 905 may add the block including the information indicating the result of executing the second processing to the BC stored in each node terminal 201 of the BC management system 200.

The output unit 905 transmits information indicating a result of verifying correctness of execution of the second processing to the leader terminal 202 operating as the third node. The output unit 905 transmits, for example, information indicating a result of determining whether or not the first processing has already been executed to the leader terminal 202 operating as the third node. With this configuration, the output unit 905 may comprehensively enable verification of correctness of execution of the second processing at the third node on the basis of the result of verifying the correctness of execution of the second processing by each node terminal 201. Specifically, the output unit 905 may enable verification of whether or not an extended agreement policy is satisfied at the third node.

Furthermore, in the BC management system 200, the leader terminal 202 includes a storage unit 910, an acquisition unit 911, a verification unit 912, a generation unit 913, a recording unit 914, and an output unit 915. The leader terminal 202 operates as the third node that generates a block in the BC management system 200.

The storage unit 910 is implemented by, for example, a storage area such as the memory 702 or the recording medium 705 illustrated in FIG. 7. Hereinafter, a case will be described where the storage unit 910 is included in the leader terminal 202, but the present invention is not limited to this. For example, the storage unit 910 may be included in a device different from the leader terminal 202, and content stored in the storage unit 910 may be able to be referred to by the leader terminal 202.

The acquisition unit 911 to the output unit 915 function as an example of a control unit. Specifically, for example, the acquisition unit 911 to the output unit 915 implement functions thereof by causing the CPU 701 to execute a program stored in a storage area such as the memory 702 or the recording medium 705 illustrated in FIG. 7 or by the network I/F 703. A processing result of each functional unit is stored in, for example, a storage area such as the memory 702 or the recording medium 705 illustrated in FIG. 7.

The storage unit 910 stores various types of information referred to or updated in processing of each functional unit. The storage unit 910 stores a BC.

The acquisition unit 911 acquires various types of information to be used for processing of each functional unit. The acquisition unit 911 stores the acquired various types of information in the storage unit 910, or outputs the acquired various types of information to each functional unit. Furthermore, the acquisition unit 911 may output the various types of information stored in the storage unit 910 to each functional unit. The acquisition unit 911 acquires the various types of information on the basis of, for example, operation input by a user. The acquisition unit 911 may receive the various types of information from, for example, a device different from the leader terminal 202.

The acquisition unit 911 acquires information indicating that the first processing has been executed. The acquisition unit 911 acquires, for example, a generation request of a block including the information indicating that the first processing has been executed by receiving the generation request from the node terminal 201. The generation request includes, for example, the information indicating that the first processing has been executed.

The acquisition unit 911 acquires information indicating a result of executing the second processing. The acquisition unit 911 acquires, for example, a generation request of a block including the information indicating the result of executing the second processing by receiving the generation request from the node terminal 201. The generation request includes, for example, the information indicating the result of executing the second processing.

The acquisition unit 911 acquires information indicating a result of determining whether or not the first processing has already been executed. The acquisition unit 911 acquires the information indicating the result of determining whether or not the first processing has already been executed by, for example, receiving the information from each node terminal 201.

The acquisition unit 911 may accept a start trigger to start processing of any one of the functional units. The start trigger is, for example, predetermined operation input by a user. The start trigger may be, for example, reception of predetermined information from another computer. The start trigger may be, for example, output of predetermined information by any one of the functional units. The acquisition unit 911 accepts acquisition of various generation requests as a start trigger to start processing of the verification unit 912, the generation unit 913, or the recording unit 914.

The verification unit 912 generates a request for verifying correctness of execution of the second processing when receiving information indicating a result of executing the second processing. The verification unit 912 generates, for example, a request for determining whether or not the first processing has already been executed. Specifically, the verification unit 912 generates the request for determining whether or not the first processing has already been executed in response to a generation request of a block including the information indicating the result of executing the second processing.

The verification unit 912 determines whether or not the execution of the second processing is appropriate. The verification unit 912 determines whether or not the execution of the second processing is appropriate on the basis of, for example, a result of verifying correctness of the execution of the second processing, which is received from each node terminal 201. Specifically, the verification unit 912 determines whether or not the execution of the second processing is appropriate on the basis of the information indicating the result of determining whether or not the first processing has already been executed, which is received from each node terminal 201.

When the execution of the second processing is appropriate, the verification unit 912 determines that the block including the information indicating the result of executing the second processing is generated. On the other hand, when the execution of the second processing is not appropriate, the verification unit 912 determines that the block including the information indicating the result of executing the second processing is not generated. With this configuration, only in a case where the execution of the second processing is appropriate, the verification unit 912 may enable generation of the block including the information indicating the result of executing the second processing.

The generation unit 913 generates a block including information indicating that the first processing has been executed. The generation unit 913 generates the block including the information indicating that the first processing has been executed in response to, for example, a generation request of the block including the information indicating that the first processing has been executed. Specifically, the generation unit 913 generates the block when there are a certain number or more of generation requests related to blocks having the same content in an acquired generation request group. With this configuration, the generation unit 913 may generate a probable block.

The generation unit 913 generates a block including information indicating a result of executing the second processing. The generation unit 913 generates the block including the information indicating the result of executing the second processing in response to, for example, a generation request of the block including the information indicating the result of executing the second processing. Specifically, the generation unit 913 generates the block when there are a certain number or more of generation requests related to blocks having the same content in an acquired generation request group. With this configuration, the generation unit 913 may generate a probable block.

Specifically, the generation unit 913 generates the block including the information indicating the result of executing the second processing only in a case where it is determined by the verification unit 912 that the block including the information indicating the result of executing the second processing is generated. On the other hand, specifically, the generation unit 913 does not generate the block including the information indicating the result of executing the second processing in a case where it is determined by the verification unit 912 that the block including the information indicating the result of executing the second processing is not generated. With this configuration, the generation unit 913 may generate the block only in a case where the order of the first processing and the second processing is guaranteed.

The recording unit 914 adds a block including information indicating that the first processing has been executed to the BC stored in the storage unit 910 of the own terminal. With this configuration, the recording unit 914 may update the BC stored in the storage unit 910 of the own terminal.

The recording unit 914 adds a block including information indicating a result of executing the second processing to the BC stored in the storage unit 910 of the own terminal. With this configuration, the recording unit 914 may update the BC stored in the storage unit 910 of the own terminal.

The output unit 915 outputs a processing result of any one of the functional units. An output format is, for example, display on a display, print output to a printer, transmission to an external device by the network I/F 703, or storage in a storage area such as the memory 702 or the recording medium 705. With this configuration, the output unit 915 enables notification of the processing result of any one of the functional units to a user, and may improve convenience of the leader terminal 202.

The output unit 915 distributes a block including information indicating that the first processing has been executed to each node terminal 201 included in the BC management system 200. With this configuration, the output unit 915 may update the BC stored in the storage unit 900 of each node terminal 201.

The output unit 915 distributes a block including information indicating a result of executing the second processing to each node terminal 201 included in the BC management system 200. With this configuration, the output unit 915 may update the BC stored in the storage unit 900 of each node terminal 201.

The output unit 915 distributes a request for verifying correctness of execution of the second processing to each node terminal 201 included in the BC management system 200. The output unit 915 distributes, for example, a request for determining whether or not the first processing has already been executed to each node terminal 201 included in the BC management system 200. With this configuration, the output unit 915 may cause each node terminal 201 to verify correctness of the execution of the second processing.

### (Flow of Operation of BC Management System 200)

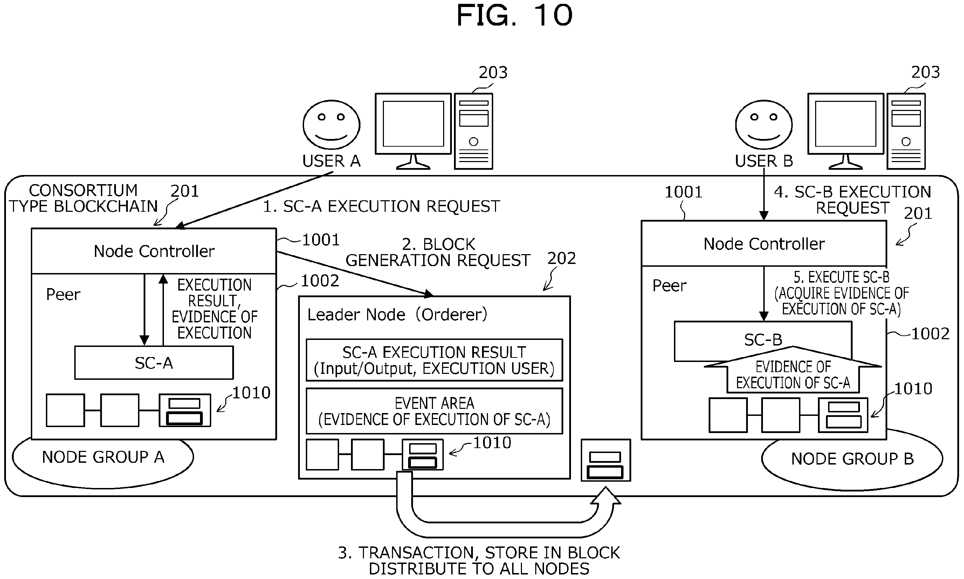

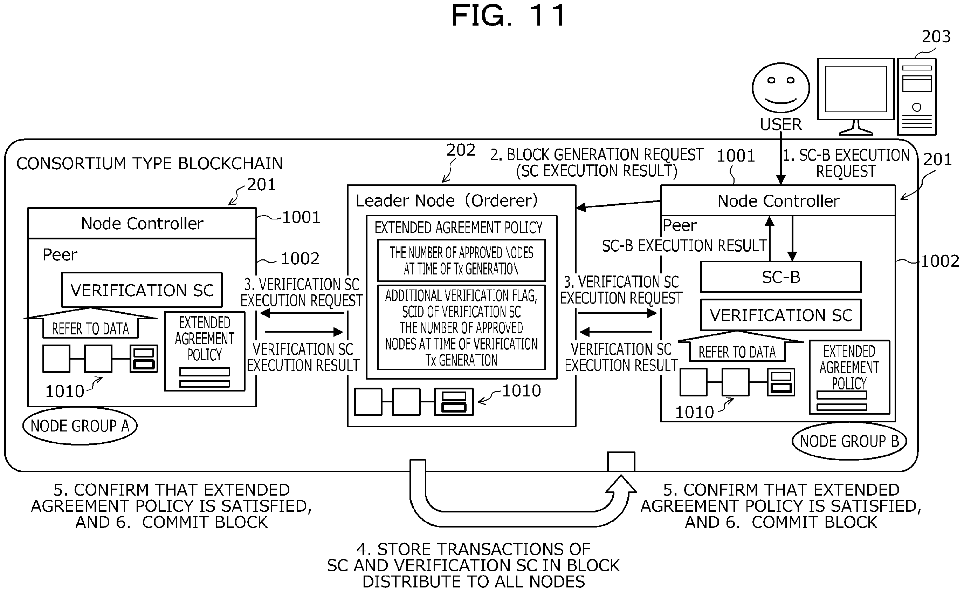

Next, a flow of operation of the BC management system 200 will be described with reference to FIGs. 10 and 11.

FIGs. 10 and 11 are explanatory diagrams illustrating the flow of the operation of the BC management system 200. In FIGs. 10 and 11, a situation where different SCs are deployed on respective node groups and the SCs are not shared among the node groups is illustrated. The node group is a set of the node terminals 201. The node terminal 201 includes a node controller 1001 and a peer 1002.

Specifically, in the BC management system 200, there are a node group A and a node group B. Additionally, a SC-A is deployed on the peer 1002 of the node terminal 201 included in the node group A. Furthermore, a SC-B is deployed on the peer 1002 of the node terminal 201 included in the node group B. In this situation, the BC management system 200 implements that verification of order of the SCs is enabled by the peer 1002 of each node terminal 201.

For example, in a block of a BC 1010, an event area is introduced so as to enable sharing of data by the respective node groups on which the different SCs are deployed. On the peer 1002 of each node terminal 201, a verification SC is deployed and an extended agreement policy is stored in order to verify the order of the SCs. The leader terminal 202 operates as an orderer. Here, description of FIG. 10 will be made.

In FIG. 10, (10-1) the execution terminal 203 transmits an execution request of the SC-A to the node controller 1001 of each node terminal 201 of the node group A on the basis of operation input by a user.

(10-2) When receiving the execution request of the SC-A via the node controller 1001, the peer 1002 of each node terminal 201 of the node group A executes the SC-A, and generates a SC execution Tx of the SC-A, including a result of the execution of the SC-A and evidence of the execution of the SC-A. The peer 1002 of each node terminal 201 of the node group A includes the generated SC execution Tx in a block generation request, and transmits the block generation request to the leader terminal 202 via the node controller 1001.

(10-3) In response to the received block generation request group, the leader terminal 202 generates a block including the SC execution Tx including the result of the execution of the SC-A and the evidence of the execution of the SC-A. Then, the leader terminal 202 adds the generated block to the BC 1010 stored in the own terminal, and distributes the generated block to the peer 1002 of each node terminal 201 of the BC management system 200. The evidence of the execution of the SC-A is stored in the event area introduced in the block of the BC 1010. The result of the execution of the SC-A may be stored outside the event area introduced in the block of the BC 1010.

The leader terminal 202 determines whether or not an additional verification flag of the extended agreement policy of the SC-A is True in a case where, for example, the current number of approved nodes is equal to or greater than the number of approved nodes at the time of Tx generation of the extended agreement policy on the basis of the received block generation request group. For example, since the additional verification flag of the acquired extended agreement policy of the SC-A is False, the leader terminal 202 determines that it is not needed to cause the peer 1002 of each node terminal 201 of the BC management system 200 to execute the verification SC.

For example, since the leader terminal 202 determines that the verification SC does not need to be executed, the leader terminal 202 generates the block including the SC execution Tx. Then, for example, the leader terminal 202 adds the generated block to the BC 1010 stored in the own terminal, and distributes the generated block to the peer 1002 of each node terminal 201 of the BC management system 200. The peer 1002 of each node terminal 201 of the BC management system 200 adds the received block to the BC 1010 stored in the own terminal.

(10-4) The execution terminal 203 transmits an execution request of the SC-B to the node controller 1001 of each node terminal 201 of the node group B on the basis of operation input by a user.

(10-5) When receiving the execution request of the SC-B via the node controller 1001, the peer 1002 of each node terminal 201 of the node group B executes the SC-B, and generates a SC execution Tx of the SC-B, including a result of the execution of the SC-B and evidence of the execution of the SC-B. At this time, the peer 1002 of each node terminal 201 of the node group B may acquire the evidence of the execution of the SC-A, and may verify order of the SC-A and the SC-B.

Next, description of FIG. 11 will be made, and a case will be described where the order of the execution of the SC-A and the SC-B is guaranteed in the BC management system 200. For example, how to guarantee, in the BC management system 200, the order of the execution of the SC-A and the SC-B in (10-4) and (10-5) will be described.

In FIG. 11, (11-1) the execution terminal 203 transmits an execution request of the SC-B to the node controller 1001 of each node terminal 201 of the node group B on the basis of operation input by a user.

(11-2) When receiving the execution request of the SC-B via the node controller 1001, the peer 1002 of each node terminal 201 of the node group B executes the SC-B, and generates a SC execution Tx of the SC-B, including a result of the execution of the SC-B. The peer 1002 of each node terminal 201 of the node group B includes the generated SC execution Tx in a block generation request, and transmits the block generation request to the leader terminal 202 via the node controller 1001.

(11-3) In response to the received block generation request group, the leader terminal 202 transmits an execution request of the verification SC to the peer 1002 of each node terminal 201 of the BC management system 200. The leader terminal 202 determines, for example, whether or not the current number of approved nodes is equal to or greater than the number of approved nodes at the time of Tx generation of the extended agreement policy on the basis of the received block generation request group.

The leader terminal 202 determines, for example, whether or not an additional verification flag of the extended agreement policy is True in a case where the current number of approved nodes is equal to or greater than the number of approved nodes at the time of Tx generation of the extended agreement policy. For example, since the additional verification flag of the extended agreement policy is True, the leader terminal 202 determines that the peer 1002 of each node terminal 201 of the BC management system 200 is caused to execute the verification SC.

Then, for example, since the leader terminal 202 determines that the verification SC is caused to be executed, the leader terminal 202 generates the execution request of the verification SC including a verification SCID of the extended agreement policy, and transmits the execution request of the verification SC to the peer 1002 of each node terminal 201 of the BC management system 200.

(11-4) When receiving the execution request of the verification SC, the peer 1002 of each node terminal 201 of the BC management system 200 executes the verification SC on the basis of the verification SCID. By executing the verification SC, the peer 1002 of each node terminal 201 of the BC management system 200 verifies correctness of the order of the execution of the SC-A and the SC-B on the basis of the evidence of the execution of the SC-A, which is stored in the block of the BC 1010, with reference to the extended agreement policy. The peer 1002 of each node terminal 201 of the BC management system 200 generates a verification Tx indicating a result of the verification and transmits the verification Tx to the leader terminal 202.

(11-5) When receiving the verification Tx group, the leader terminal 202 determines whether or not the current number of approved nodes is equal to or greater than the number of approved nodes at the time of verification Tx generation of the extended agreement policy on the basis of the received verification Tx group.

When the current number of approved nodes is equal to or greater than the number of approved nodes at the time of verification Tx generation of the extended agreement policy, the leader terminal 202 generates a block including the SC execution Tx group of the SC-B and the received verification Tx group. The leader terminal 202 adds the generated block to the BC 1010 stored in the own terminal, and distributes the generated block to the peer 1002 of each node terminal 201 of the BC management system 200.

(11-6) When receiving the block, the peer 1002 of each node terminal 201 of the BC management system 200 determines whether or not the current number of approved nodes is equal to or greater than the number of approved nodes at the time of verification Tx generation of the extended agreement policy on the basis of the verification Tx group included in the block.

When the current number of approved nodes is equal to or greater than the number of approved nodes at the time of verification Tx generation of the extended agreement policy, the peer 1002 of each node terminal 201 of the BC management system 200 adds the received block to the BC 1010 stored in the own terminal. With this configuration, the BC management system 200 may enable verification of the order of the execution of the SCs at each node terminal 201 without sharing the SCs among the node terminals 201 in which different SCs are deployed.

### (Operation Example of BC Management System 200)

Next, an operation example of the BC management system 200 will be described with reference to FIGs. 12 to 14.

FIGs. 12 to 14 are explanatory diagrams illustrating the operation example of the BC management system 200. A BC 1020 is stored in a peer 1202 of each node terminal 201 of the BC management system 200 and the leader terminal 202. In a block of the BC 1020, an event area is introduced so as to enable sharing of data by the respective node groups on which the different SCs are deployed.

A SC-1 is deployed on the peer 1202 of each node terminal 201 of a node group 1. A SC-2 for which the extended agreement policy is set is deployed on the peer 1202 of each node terminal 201 of a node group 2. The node groups do not share the SC-1 and the SC-2 with each other.

When the SC-1 is deployed on the peer 1202 of each node terminal 201 of the node group 1, the extended agreement policy of the SC-1 is written in the BC 1020 included in each node terminal 201 of the BC management system 200 and the agreement policy reference table 500 of an internal DB 1210.

The extended agreement policy of the SC-1 includes, for example, a TxID of a Tx of SC-1 deployment. The extended agreement policy of the SC-1 includes, for example, a SCID of the SC-1 and the number of approved nodes in the node group 1 at the time of Tx generation of the SC-1. The extended agreement policy of the SC-1 includes, for example, an additional verification flag = False, and because the additional verification flag = False, it is not needed to include a verification SCID corresponding to the SC-1, the number of approved nodes in the BC management system 200 at the time of verification Tx generation of the verification SC, and the like.

When the SC-2 is deployed on the peer 1202 of each node terminal 201 of the node group 2, the extended agreement policy of the SC-2 is written in the BC 1020 included in each node terminal 201 of the BC management system 200 and the agreement policy reference table 500 of the internal DB 1210.

The extended agreement policy of the SC-2 includes, for example, a TxID of a Tx of SC-2 deployment. The extended agreement policy of the SC-2 includes, for example, a SCID of the SC-2 and the number of approved nodes in the node group 2 at the time of Tx generation of the SC-2. The extended agreement policy of the SC-2 includes, for example, an additional verification flag = True, a verification SCID corresponding to the SC-2, and the number of approved nodes in the BC management system 200 at the time of verification Tx generation of the verification SC.

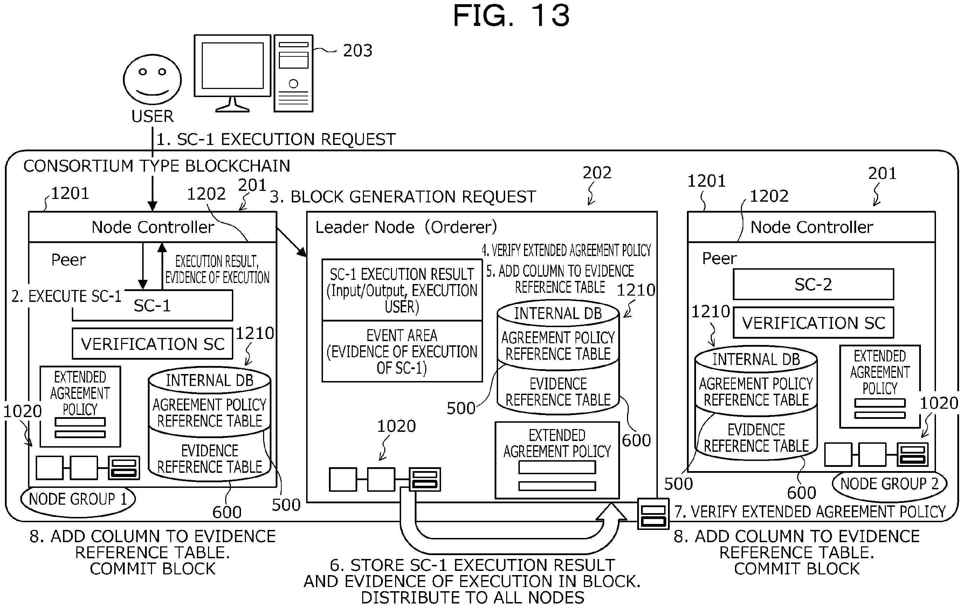

In the peer 1202 of each node terminal 201 of the BC management system 200, the evidence reference table 600 is prepared in the internal DB 1210 to record index information regarding evidence of execution of the SC-1. The index information regarding the evidence includes, for example, a user ID, the SCID of the SC-1, and a TxID list. The verification SC is deployed on the peer 1202 of each node terminal 201 of the BC management system 200 to verify correctness of order of the execution of the SC-1 and the SC-2 and to verify correctness of the execution of the SC-2. The leader terminal 202 operates as an orderer. Next, description of FIG. 13 will be made.

In FIG. 13, (13-1) the execution terminal 203 transmits an execution request of the SC-1 to a node controller 1201 of each node terminal 201 of the node group 1 on the basis of operation input by a user. The execution request of the SC-1 includes, for example, the SCID of the SC-1.

(13-2) When receiving the execution request of the SC-1 via the node controller 1201, the peer 1202 of each node terminal 201 of the node group 1 executes the SC-1, and generates a SC execution Tx of the SC-1, including a result of the execution of the SC-1 and evidence of the execution of the SC-1. The evidence of the execution of the SC-1 includes a TxID of a Tx of the SC-1, the SCID of the SC-1, a condition under which a Tx of the SC-1 is valid, and the like. The condition includes, for example, an expiration date of a Tx, or an applicable condition.

(13-3) The peer 1202 of each node terminal 201 of the node group 1 includes the generated SC execution Tx in a block generation request, and transmits the block generation request to the leader terminal 202 via the node controller 1201.

(13-4) When receiving the block generation request group, the leader terminal 202 acquires the extended agreement policy of the SC-1 from the agreement policy reference table 500 of the internal DB 1210. On the basis of the received block generation request group, the leader terminal 202 calculates the current number of approved nodes, which indicates the number of node terminals 201 that have generated the same SC execution Tx. The leader terminal 202 determines whether or not the calculated current number of approved nodes is equal to or greater than the number of approved nodes at the time of Tx generation of the acquired extended agreement policy of the SC-1. Here, the leader terminal 202 determines that the calculated current number of approved nodes is equal to or greater than the number of approved nodes at the time of Tx generation of the acquired extended agreement policy of the SC-1.

In a case where the current number of approved nodes is equal to or greater than the number of approved nodes at the time of Tx generation of the acquired extended agreement policy of the SC-1, the leader terminal 202 determines whether or not the additional verification flag of the acquired extended agreement policy of the SC-1 is True. Since the additional verification flag of the acquired extended agreement policy of the SC-1 is False, the leader terminal 202 determines that it is not needed to cause the peer 1202 of each node terminal 201 of the BC management system 200 to execute the verification SC.

Since the leader terminal 202 determines that the verification SC does not need to be executed, the leader terminal 202 generates a block including the SC execution Tx group including the result of the execution of the SC-1 and the evidence of the execution of the SC-1. The evidence of the execution of the SC-1 is included in the event area within the block.

(13-5) The leader terminal 202 adds the generated block to the BC 1020 stored in the own terminal. The leader terminal 202 stores index information regarding the evidence of the execution of the SC-1 in the evidence reference table 600 of the internal DB 1210. The index information includes, for example, an execution user ID of the SC-1, the SCID of the SC-1, and a TxID of the SC execution Tx of the SC-1.

(13-6) The leader terminal 202 distributes the generated block to the peer 1202 of each node terminal 201 of the BC management system 200.

(13-7) When receiving the block, the peer 1202 of each node terminal 201 of the BC management system 200 acquires the extended agreement policy of the SC-1 from the agreement policy reference table 500 of the internal DB 1210. On the basis of the SC execution Tx group included in the received block, the peer 1202 of each node terminal 201 of the BC management system 200 calculates the current number of approved nodes, which indicates the number of node terminals 201 that have generated the same SC execution Tx.

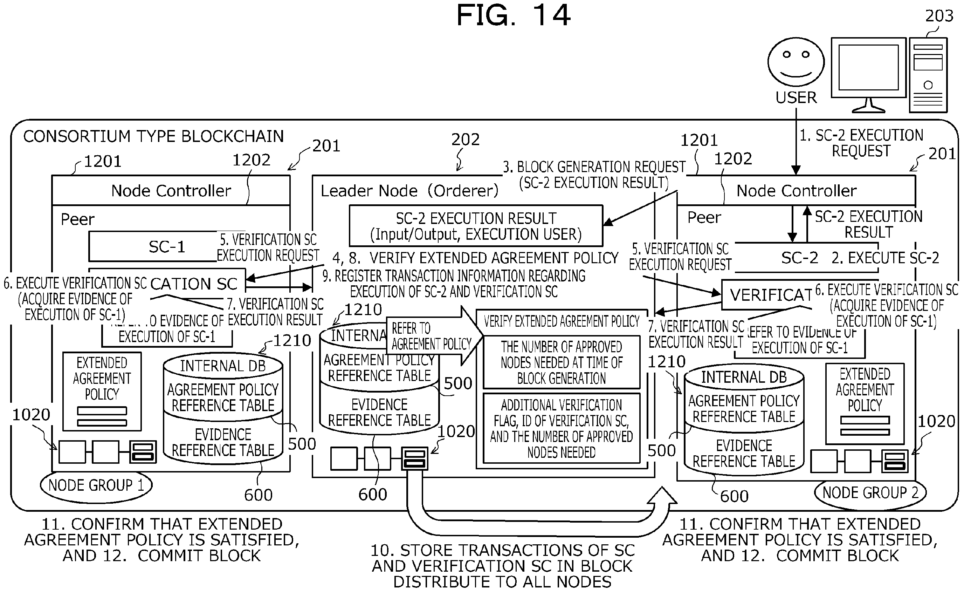

(13-8) when the calculated current number of approved nodes is equal to or greater than the number of approved nodes at the time of Tx generation of the acquired extended agreement policy of the SC-1, the peer 1202 of each node terminal 201 of the BC management system 200 adds the received block to the BC 1020 stored in the own terminal. The peer 1202 of each node terminal 201 of the BC management system 200 stores the index information regarding the evidence of the execution of the SC-1 in the evidence reference table 600 of the internal DB 1210. Next, description of FIG. 14 will be made.

In FIG. 14, (14-1) the execution terminal 203 transmits an execution request of the SC-2 to the node controller 1201 of each node terminal 201 of the node group 2 on the basis of operation input by a user.

(14-2) When receiving the execution request of the SC-2 via the node controller 1201, the peer 1202 of each node terminal 201 of the node group 2 executes the SC-2, and generates a SC execution Tx of the SC-2, including a result of the execution of the SC-2.

(14-3) The peer 1202 of each node terminal 201 of the node group 2 includes the generated SC execution Tx in a block generation request, and transmits the block generation request to the leader terminal 202 via the node controller 1201.

(14-4) When receiving the block generation request group, the leader terminal 202 acquires the extended agreement policy of the SC-2 from the agreement policy reference table 500 of the internal DB 1210. On the basis of the received block generation request group, the leader terminal 202 calculates the current number of approved nodes, which indicates the number of node terminals 201 that have generated the same SC execution Tx. The leader terminal 202 determines whether or not the calculated current number of approved nodes is equal to or greater than the number of approved nodes at the time of Tx generation of the acquired extended agreement policy of the SC-2.

In a case where the current number of approved nodes is equal to or greater than the number of approved nodes at the time of Tx generation of the acquired extended agreement policy of the SC-2, the leader terminal 202 determines whether or not the additional verification flag of the acquired extended agreement policy of the SC-2 is True. Since the additional verification flag of the extended agreement policy of the SC-2 is True, the leader terminal 202 determines that the peer 1202 of each node terminal 201 of the BC management system 200 is caused to execute the verification SC.

(14-5) Since the leader terminal 202 determines that the peer 1202 of each node terminal 201 of the BC management system 200 is caused to execute the verification SC, the leader terminal 202 generates an execution request of the verification SC including a verification SCID of the extended agreement policy. The leader terminal 202 transmits the generated execution request of the verification SC to the peer 1202 of each node terminal 201 of the BC management system 200.

(14-6) When receiving the execution request of the verification SC, the peer 1202 of each node terminal 201 of the BC management system 200 executes the verification SC on the basis of the verification SCID. By executing the verification SC, the peer 1202 of each node terminal 201 of the BC management system 200 verifies correctness of the order of the execution of the SC-1 and the SC-2 on the basis of the evidence of the execution of the SC-1, which is stored in the block of the BC 1020, with reference to the extended agreement policy.

(14-7) The peer 1202 of each node terminal 201 of the BC management system 200 generates a verification Tx indicating a result of the verification and transmits the verification Tx to the leader terminal 202.

(14-8) When receiving the verification Tx group, the leader terminal 202 acquires the extended agreement policy of the SC-2 from the agreement policy reference table 500 of the internal DB 1210. On the basis of the received verification Tx group, the leader terminal 202 calculates the current number of approved nodes, which indicates the number of node terminals 201 that are determined to have valid order of the execution of the SC-1 and the SC-2. The leader terminal 202 determines whether or not the calculated current number of approved nodes is equal to or greater than the number of approved nodes at the time of verification Tx generation of the extended agreement policy of the SC-2.

(14-9) When the current number of approved nodes is equal to or greater than the number of approved nodes at the time of verification Tx generation of the extended agreement policy of the SC-2, the leader terminal 202 generates a block including the SC execution Tx group of the SC-2 and the received verification Tx group. The leader terminal 202 adds the generated block to the BC 1020 stored in the own terminal.

(14-10) The leader terminal 202 distributes the generated block to the peer 1202 of each node terminal 201 of the BC management system 200.

(14-11) When receiving the block, the peer 1202 of each node terminal 201 of the BC management system 200 calculates the current number of approved nodes on the basis of the verification Tx group included in the block. The current number of approved nodes indicates the number of node terminals 201 that are determined to have valid order of the execution of the SC-1 and the SC-2. The peer 1202 of each node terminal 201 of the BC management system 200 determines whether or not the calculated current number of approved nodes is equal to or greater than the number of approved nodes at the time of verification Tx generation of the extended agreement policy.

(14-12) When the current number of approved nodes is equal to or greater than the number of approved nodes at the time of verification Tx generation of the extended agreement policy, the peer 1202 of each node terminal 201 of the BC management system 200 adds the received block to the BC 1020 stored in the own terminal. With this configuration, the BC management system 200 may enable verification of the order of the execution of the SCs at each node terminal 201 without sharing the SCs among the node terminals 201 in which different SCs are deployed.

### (Specific Configuration Example of BC Management System 200)

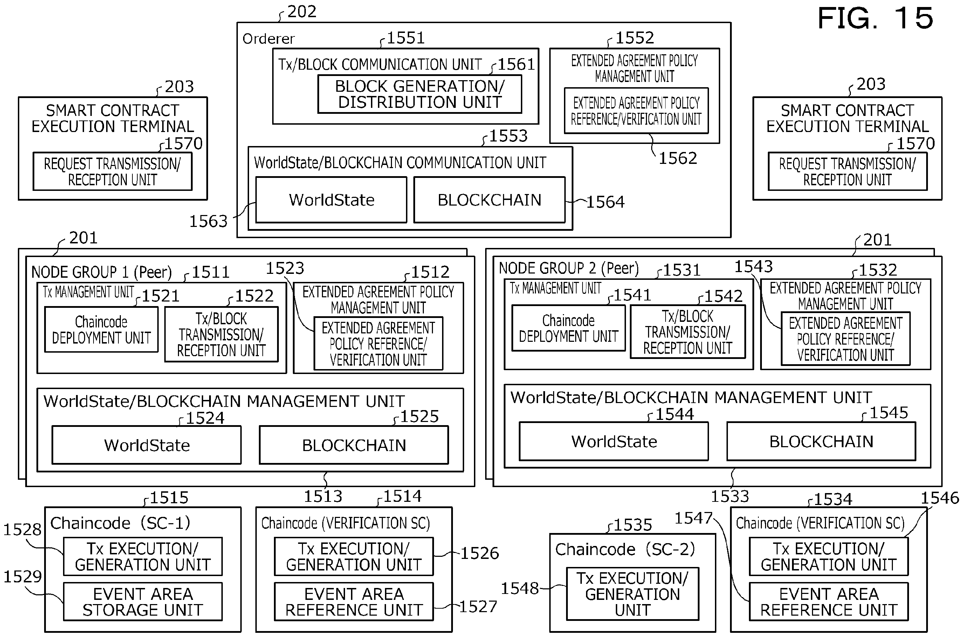

Next, a specific configuration example of the BC management system 200 will be described with reference to FIGs. 15 to 18.

FIGs. 15 to 18 are explanatory diagrams illustrating the specific configuration example of the BC management system 200. The BC management system 200 includes the node group 1, the node group 2, the leader terminal 202 as an orderer, and the execution terminal 203.

A peer of each node terminal 201 of the node group 1 includes a Tx management unit 1511, an extended agreement policy management unit 1512, and a WorldState/BC management unit 1513. In the following description, a World State may be referred to as "WS".

The Tx management unit 1511, the extended agreement policy management unit 1512, and the WS/BC management unit 1513 implement functions thereof by, for example, causing the CPU 301 to execute a program stored in a storage area such as the memory 302 or the recording medium 305. Processing results of the Tx management unit 1511, the extended agreement policy management unit 1512, and the WS/BC management unit 1513 are stored in, for example, a storage area such as the memory 302 or the recording medium 305.

The Tx management unit 1511 includes a Chaincode deployment unit 1521 and a Tx/block transmission/reception unit 1522. In the following description, a Chaincode may be referred to as °Cc". The extended agreement policy management unit 1512 includes an extended agreement policy reference/verification unit 1523. The WS/BC management unit 1513 includes a WS 1524 and a BC 1525. The WS 1524 corresponds to the internal DB. The WS 1524 stores the agreement policy reference table 500 and the evidence reference table 600.

In the peer of each node terminal 201 of the node group 1, a Cc 1514 of the verification SC is deployed by the Cc deployment unit 1521. The Cc 1514 of the verification SC includes a Tx execution/generation unit 1526 and an event area reference unit 1527. In the peer of each node terminal 201 of the node group 1, a Cc 1515 of the SC-1 is deployed by the Cc deployment unit 1521. The Cc 1515 of the SC-1 includes a Tx execution/generation unit 1528 and an event area storage unit 1529.

A peer of each node terminal 201 of the node group 2 includes a Tx management unit 1531, an extended agreement policy management unit 1532, and a WS/BC management unit 1533.

The Tx management unit 1531, the extended agreement policy management unit 1532, and the WS/BC management unit 1533 implement functions thereof by, for example, causing the CPU 301 to execute a program stored in a storage area such as the memory 302 or the recording medium 305. Processing results of the Tx management unit 1531, the extended agreement policy management unit 1532, and the WS/BC management unit 1533 are stored in, for example, a storage area such as the memory 302 or the recording medium 305.

The Tx management unit 1531 includes a Cc deployment unit 1541 and a Tx/block transmission/reception unit 1542. The extended agreement policy management unit 1532 includes an extended agreement policy reference/verification unit 1543. The WS/BC management unit 1533 includes a WS 1544 and a BC 1545. The WS 1544 corresponds to the internal DB. The WS 1544 stores the agreement policy reference table 500 and the evidence reference table 600.

In the peer of each node terminal 201 of the node group 2, a Cc 1534 of the verification SC is deployed by the Cc deployment unit 1541. The Cc 1534 of the verification SC includes a Tx execution/generation unit 1546 and an event area reference unit 1547. A Cc 1535 of the SC-2 for which the extended agreement policy is set in the peer of each node terminal 201 of the node group 2 is deployed by the Cc deployment unit 1541. The Cc 1535 of the SC-2 includes a Tx execution/generation unit 1548. The node group 1 and the node group 2 do not share the SC-1 and the SC-2 with each other.

The leader terminal 202 includes a Tx/block communication unit 1551, an extended agreement policy management unit 1552, and a WS/BC communication unit 1553.

The Tx/block communication unit 1551, the extended agreement policy management unit 1552, and the WS/BC communication unit 1553 implement functions thereof by, for example, causing the CPU 701 to execute a program stored in a storage area such as the memory 702 or the recording medium 705. Processing results of the Tx/block communication unit 1551, the extended agreement policy management unit 1552, and the WS/BC communication unit 1553 are stored in, for example, a storage area such as the memory 702 or the recording medium 705.

The Tx/block communication unit 1551 includes a block generation/distribution unit 1561. The extended agreement policy management unit 1552 includes an extended agreement policy reference/verification unit 1562. The WS/BC communication unit 1553 includes a WS 1563 and a BC 1564. The WS 1563 corresponds to the internal DB. The WS 1563 stores the agreement policy reference table 500 and the evidence reference table 600. The BC 1525, the BC 1545, and the BC 1564 are updated to have the same content in a timely manner.

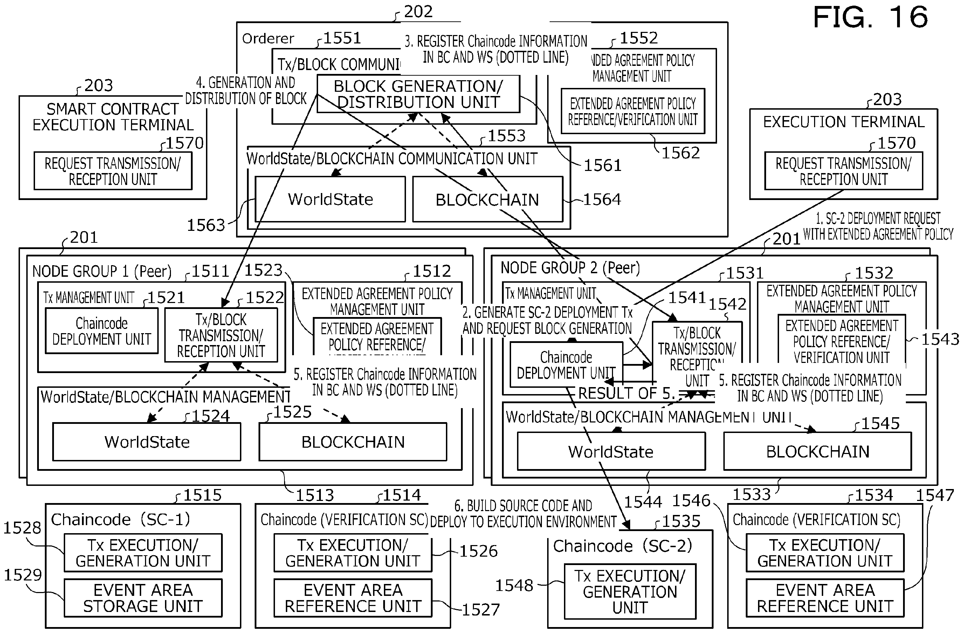

The execution terminal 203 includes a request transmission/reception unit 1570. The request transmission/reception unit 1570 implements a function thereof by, for example, causing the CPU 801 to execute a program stored in a storage area such as the memory 802 or the recording medium 805. A processing result of the request transmission/reception unit 1570 is stored in, for example, a storage area such as the memory 802 or the recording medium 805. Next, description of FIG. 16 will be made, and how the Cc 1535 of the SC-2 is deployed by the Cc deployment unit 1541 in the peer of each node terminal 201 of the node group 2 will be described.

In FIG. 16, when the Cc 1535 of the SC-2 is deployed in the peer of each node terminal 201 of the node group 2, the extended agreement policy of the SC-2 is written in the BC 1545. Furthermore, similarly, the extended agreement policy of the SC-2 is written in the BC 1525 and the BC 1564.

The extended agreement policy of the SC-2 includes the TxID of the Tx at the time of deployment of the SC-2, the SCID of the SC-2, the number of approved nodes at the time of Tx generation of the SC-2, the additional verification flag of the SC-2, the verification SCID of the verification SC corresponding to the SC-2, the number of approved nodes at the time of verification Tx generation, and the like.

Index information regarding the SC-2 is written in the agreement policy reference table 500 of the WS 1544. Furthermore, similarly, the index information regarding the SC-2 is written in the agreement policy reference table 500 of the WS 1524 and the WS 1563. The index information includes, for example, the SCID of the SC-2 and the TxID of the Tx at the time of deployment of the SC-2.

(16-1) A user operates the execution terminal 203 and specifies the SCID of the SC-2 and the extended agreement policy of the SC-2. On the basis of the operation input, the execution terminal 203 generates a SC-2 deployment request including the SCID of the SC-2 and the extended agreement policy of the SC-2 and transmits the SC-2 deployment request to the peer of each node terminal 201 of the node group 2, by the request transmission/reception unit 1570.

(16-2) The Cc deployment unit 1541 of the peer of each node terminal 201 of the node group 2 generates a Tx at the time of deployment of the SC-2, and generates a generation request of a block including the generated Tx. The Tx indicates a pair of the SCID of the SC-2 and the extended agreement policy of the SC-2. The Tx/block transmission/reception unit 1542 of the peer of each node terminal 201 of the node group 2 transmits the generation request of the block including the generated Tx to the leader terminal 202.

(16-3) The block generation/distribution unit 1561 of the leader terminal 202 registers Cc information regarding the SC-2 in the BC 1564 and the agreement policy reference table 500 of the WS 1563. The Cc information regarding the SC-2 includes the TxID of the Tx at the time of deployment of the SC-2, the SCID of the SC-2, and the extended agreement policy of the SC-2.

(16-4) The block generation/distribution unit 1561 of the leader terminal 202 generates the block including the Tx at the time of deployment of the SC-2, and distributes the block to the peer of each node terminal 201 of the node group 1 and the peer of each node terminal 201 of the node group 2.

(16-5) The Tx/block transmission/reception unit 1522 of the peer of each node terminal 201 of the node group 1 registers the Cc information regarding the SC-2 in the BC 1525 and the agreement policy reference table 500 of the WS 1524.

Furthermore, the Tx/block transmission/reception unit 1542 of the peer of each node terminal 201 of the node group 2 registers the Cc information regarding the SC-2 in the BC 1545 and the agreement policy reference table 500 of the WS 1544. The Tx/block transmission/reception unit 1542 of the peer of each node terminal 201 of the node group 2 transmits a notification of completion of registration to the Cc deployment unit 1541.

(16-6) When receiving the notification of the completion of the registration, the Cc deployment unit 1541 of the peer of each node terminal 201 of the node group 2 builds a source code of the Cc 1535 of the SC-2, and deploys the Cc 1535 of the SC-2 to an execution environment. With this configuration, the BC management system 200 may enable execution of the SC-2.

Here, since it is possible to grasp how the Cc 1515 of the SC-1 is deployed by the Cc deployment unit 1521 in the peer of each node terminal 201 of the node group 1 by referring to FIG. 16, description thereof is omitted.

Furthermore, since it is possible to grasp how the Cc 1514 of the verification SC is deployed by the Cc deployment unit 1521 in the peer of each node terminal 201 of the node group 1 by referring to FIG. 16, description thereof is omitted.

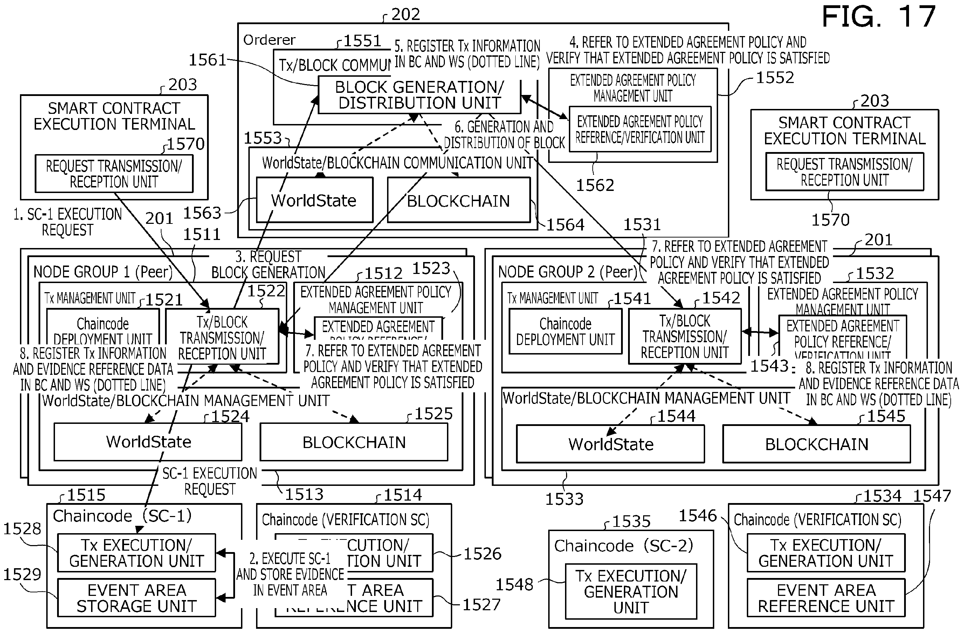

Furthermore, since it is possible to grasp how the Cc 1534 of the verification SC is deployed by the Cc deployment unit 1541 in the peer of each node terminal 201 of the node group 2 by referring to FIG. 16, description thereof is omitted. Next, description of FIG. 17 will be made, and how the SC-1 is executed in the peer of each node terminal 201 of the node group 1 will be described.

In FIG. 17, when the peer of each node terminal 201 of the node group 1 executes the SC-1, evidence of the execution is transmitted to the leader terminal 202 in addition to a result of the execution. The leader terminal 202 generates a block including the evidence of the execution in the event area, and distributes the generated block to the peer of each node terminal 201 of the BC management system 200. The peer of each node terminal 201 of the BC management system 200 and the leader terminal 202 write the index information including the execution user ID, the SCID, and the TxID at the time of the execution of the SC-1 in the evidence reference table 600.

(17-1) A user operates the execution terminal 203. On the basis of the operation input, the execution terminal 203 transmits an execution request of the SC-1 to the peer of each node terminal 201 of the node group 1 by the request transmission/reception unit 1570.

(17-2) The Tx/block transmission/reception unit 1522 of the peer of each node terminal 201 of the node group 1 receives the execution request of the SC-1, and transmits the execution request of the SC-1 to the Tx execution/generation unit 1528 of the SC-1. The Tx execution/generation unit 1528 and the event area storage unit 1529 of the SC-1 of each node terminal 201 of the node group 1 execute the SC-1, and transmit the result of the execution and the evidence of the execution to the Tx/block transmission/reception unit 1522. The evidence of the execution includes the TxID of the Tx of the SC-1, the SCID of the SC-1, the condition under which the Tx of the SC-1 is valid, and the like.

(17-3) The Tx/block transmission/reception unit 1522 of the peer of each node terminal 201 of the node group 1 generates a SC execution Tx of the SC-1 including the result of the execution and the evidence of the execution in the event area. The Tx/block transmission/reception unit 1522 of the peer of each node terminal 201 of the node group 1 generates a generation request of a block including the generated SC execution Tx of the SC-1, and transmits the generation request to the leader terminal 202.

(17-4) The block generation/distribution unit 1561 of the leader terminal 202 passes the SCID of the SC-1 to the extended agreement policy reference/verification unit 1562, and acquires the extended agreement policy of the SC-1 from the agreement policy reference table 500. The block generation/distribution unit 1561 of the leader terminal 202 verifies whether or not the acquired extended agreement policy is satisfied on the basis of the received SC execution Tx group of the SC-1.

(17-5) The block generation/distribution unit 1561 of the leader terminal 202 registers SC execution Tx information regarding the SC-1 in the BC 1564 and the WS 1563. The block generation/distribution unit 1561 of the leader terminal 202 registers the execution user ID of the SC-1, the SCID of the SC-1, and the TxID of the SC execution Tx of the SC-1 in the evidence reference table 600 of the WS 1563.

(17-6) The block generation/distribution unit 1561 of the leader terminal 202 generates a block including the SC execution Tx of the SC-1, and distributes the block to the peer of each node terminal 201 of the node group 1 and the peer of each node terminal 201 of the node group 2.

(17-7) The Tx/block transmission/reception unit 1522 of the peer of each node terminal 201 of the node group 1 passes the SCID of the SC-1 to the extended agreement policy reference/verification unit 1523, and acquires the extended agreement policy of the SC-1. The Tx/block transmission/reception unit 1522 of the peer of each node terminal 201 of the node group 1 determines whether or not the SC execution Tx group of the SC-1 satisfies the acquired extended agreement policy.

The Tx/block transmission/reception unit 1542 of the peer of each node terminal 201 of the node group 2 passes the SCID of the SC-1 to the extended agreement policy reference/verification unit 1543, and acquires the extended agreement policy of the SC-1. The Tx/block transmission/reception unit 1542 of the peer of each node terminal 201 of the node group 2 determines whether or not the SC execution Tx group of the SC-1 satisfies the acquired extended agreement policy.

(17-8) The Tx/block transmission/reception unit 1522 of the peer of each node terminal 201 of the node group 1 registers the SC execution Tx information regarding the SC-1 in the BC 1525 and the WS 1524. The Tx/block transmission/reception unit 1522 of the peer of each node terminal 201 of the node group 1 registers the execution user ID of the SC-1, the SCID of the SC-1, and the TxID of the SC-1 in the evidence reference table 600 of the WS 1524.

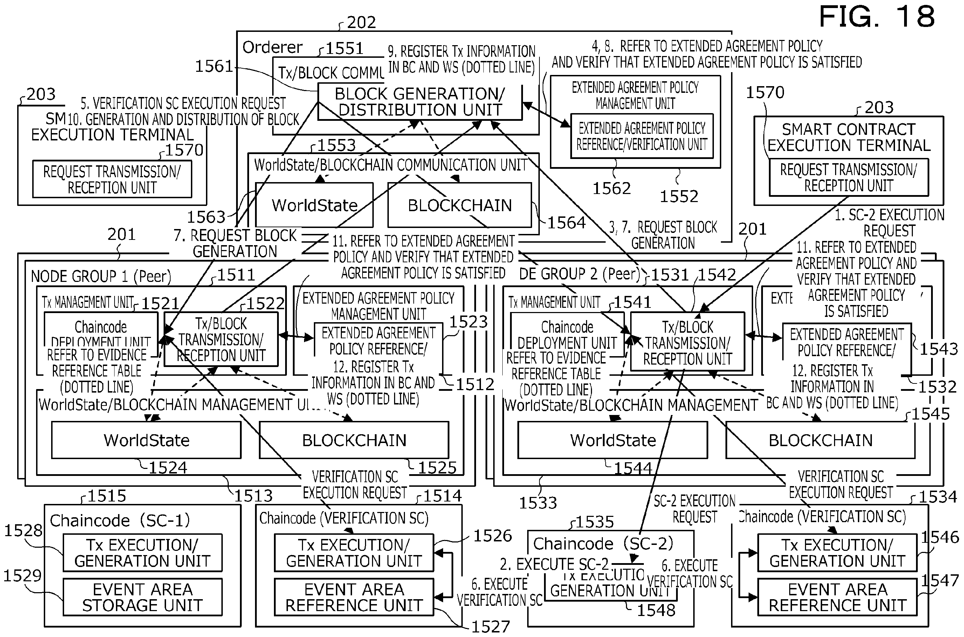

With this configuration, the BC management system 200 may execute the SC-1 and store the result of the execution and the evidence of the execution of the SC-1 in the BCs 1525, 1545, and 1564. Next, description of FIG. 18 will be made, and how the SC-2 is executed in the peer of each node terminal 201 of the node group 2 will be described.

In FIG. 18, when the peer of each node terminal 201 of the node group 2 executes the SC-2, a result of the execution of the SC-2 is transmitted to the leader terminal 202. When the leader terminal 202 that has collected the result of the execution of the SC-2 generates a block including the result of the execution of the SC-2, an execution request of the verification SC is transmitted to the peer of each node terminal 201 of the BC management system 200 on the basis of the extended agreement policy of the SC-2.

The peer of each node terminal 201 of the BC management system 200 executes the verification SC. On the basis of the execution user ID, the SCID, and the TxID stored in the evidence reference table 600, the peer of each node terminal 201 of the BC management system 200 acquires the evidence of the execution of the SC-1, compares the evidence with the result of the execution of the SC-2, and verifies execution conditions of the SC-2. The execution condition is, for example, a condition related to the order of the execution of the SC-1 and the SC-2. The execution condition may include, for example, a condition related to other than the order of the execution of the SC-1 and the SC-2. As a result of the execution of the verification SC, the peer of each node terminal 201 of the BC management system 200 transmits a verification Tx of the verification SC including a result of the verification (OK/NG) to the leader terminal 202.

The leader terminal 202 verifies whether or not the collected result of the execution of the verification SC satisfies the extended agreement policy. In a case where the extended agreement policy is satisfied, the leader terminal 202 generates a block including the SC execution Tx of the SC-2 and the verification Tx of the verification SC collectively, and distributes the block to the peer of each node terminal 201 of the BC management system 200.

The peer of each node terminal 201 of the BC management system 200 determines whether or not the extended agreement policy is satisfied on the basis of the verification Tx of the verification SC included in the received block. In a case where it is determined that the extended agreement policy is satisfied, the peer of each node terminal 201 of the BC management system 200 stores the received block.

(18-1) A user operates the execution terminal 203. On the basis of the operation input, the execution terminal 203 transmits an execution request of the SC-2 to the peer of each node terminal 201 of the node group 2 by the request transmission/reception unit 1570.

(18-2) The Tx/block transmission/reception unit 1542 of the peer of each node terminal 201 of the node group 2 receives the execution request of the SC-2, and transmits the execution request of the SC-2 to the Tx execution/generation unit 1548 of the SC-2. The Tx execution/generation unit 1548 of the SC-2 of each node terminal 201 of the node group 2 executes the SC-2, and transmits the result of the execution to the Tx/block transmission/reception unit 1542 of the peer of each node terminal 201 of the node group 2. The result of the execution includes Input/Output and the execution user ID.

(18-3) The Tx/block transmission/reception unit 1542 of the peer of each node terminal 201 of the node group 2 generates a SC execution Tx of the SC-2, and generates a generation request of a block including the generated SC execution Tx of the SC-2. The Tx/block transmission/reception unit 1542 of the peer of each node terminal 201 of the node group 2 transmits the generated generation request of the block including the SC execution Tx of the SC-2 to the leader terminal 202.

(18-4) The block generation/distribution unit 1561 of the leader terminal 202 passes the SCID of the SC-2 to the extended agreement policy reference/verification unit 1562, and acquires the extended agreement policy of the SC-2. The block generation/distribution unit 1561 of the leader terminal 202 determines whether or not the SC execution Tx group of the SC-2 satisfies the acquired extended agreement policy of the SC-2. Here, the block generation/distribution unit 1561 of the leader terminal 202 determines that the SC execution Tx group of the SC-2 satisfies the acquired extended agreement policy of the SC-2.

(18-5) The block generation/distribution unit 1561 of the leader terminal 202 determines that the additional verification flag of the acquired extended agreement policy of the SC-2 is True. Therefore, the block generation/distribution unit 1561 of the leader terminal 202 transmits an execution request of the verification SC including the SCID of the verification SC and the result of the execution of the SC-2 to the peer of each node terminal 201 of the BC management system 200.

(18-6) The Tx/block transmission/reception unit 1522 of the peer of each node terminal 201 of the node group 1 acquires the TxID of the SC execution Tx of the SC-1 from the evidence reference table 600 on the basis of the execution user ID included in the result of the execution of the SC-2. The Tx/block transmission/reception unit 1522 of the peer of each node terminal 201 of the node group 1 transmits the acquired TxID of the SC execution Tx of the SC-1 together with the result of the execution of the SC-2 to the Tx execution/generation unit 1526 of the verification SC.

The Tx execution/generation unit 1526 of the verification SC executes the verification SC, passes the TxID of the SC execution Tx of the SC-1 to the event area reference unit 1527, and acquires the evidence of the execution of the SC-1. The Tx execution/generation unit 1526 of the verification SC verifies the execution conditions of the SC-2 by comparing the acquired evidence of the execution of the SC-1 with the Input/Output included in the result of the execution of the SC-2. The Tx execution/generation unit 1526 of the verification SC transmits a result of the verification (OK/NG) to the Tx/block transmission/reception unit 1522 of the peer.

The Tx/block transmission/reception unit 1542 of the peer of each node terminal 201 of the node group 2 acquires the TxID of the SC execution Tx of the SC-1 from the evidence reference table 600 on the basis of the execution user ID included in the result of the execution of the SC-2. The Tx/block transmission/reception unit 1542 of the peer of each node terminal 201 of the node group 2 transmits the acquired TxID of the SC execution Tx of the SC-1 together with the result of the execution of the SC-2 to the Tx execution/generation unit 1546 of the verification SC.

The Tx execution/generation unit 1546 of the verification SC executes the verification SC, passes the TxID of the SC execution Tx of the SC-1 to the event area reference unit 1547, and acquires the evidence of the execution of the SC-1. The Tx execution/generation unit 1546 of the verification SC verifies the execution conditions of the SC-2 by comparing the acquired evidence of the execution of the SC-1 with the Input/Output included in the result of the execution of the SC-2. The Tx execution/generation unit 1546 of the verification SC transmits a result of the verification (OK/NG) to the Tx/block transmission/reception unit 1542 of the peer.

(18-7) The Tx/block transmission/reception unit 1522 of the peer of each node terminal 201 of the node group 1 generates a verification Tx of the verification SC including the result of the verification (OK/NG), and generates a generation request of a block including the generated verification Tx. The Tx/block transmission/reception unit 1522 of the peer of each node terminal 201 of the node group 1 transmits the generated generation request of the block including the verification Tx to the leader terminal 202.

The Tx/block transmission/reception unit 1542 of the peer of each node terminal 201 of the node group 2 generates a verification Tx of the verification SC, and generates a generation request of a block including the generated verification Tx. The Tx/block transmission/reception unit 1542 of the peer of each node terminal 201 of the node group 2 transmits the generated generation request of the block including the verification Tx to the leader terminal 202.

(18-8) The block generation/distribution unit 1561 of the leader terminal 202 passes the SCID of the SC-2 to the extended agreement policy reference/verification unit 1562, and acquires the extended agreement policy of the SC-2. The block generation/distribution unit 1561 of the leader terminal 202 calculates the number of "the result of the verification = OK" included in the verification Tx included in the collected generation request.

With reference to the acquired extended agreement policy of the SC-2, the block generation/distribution unit 1561 of the leader terminal 202 verifies whether or not the calculated number of "the result of the verification = OK" is equal to or greater than the number of approved nodes at the time of verification Tx generation of the extended agreement policy of the SC-2. Here, the block generation/distribution unit 1561 of the leader terminal 202 determines that the number of "the result of the verification = OK" included in the collected generation request is equal to or greater than the number of approved nodes at the time of verification Tx generation of the extended agreement policy of the SC-2.

(18-9) The block generation/distribution unit 1561 of the leader terminal 202 registers the SC execution Tx of the SC-2 and the verification Tx of the verification SC in the BC 1564 and the WS 1563.

(18-10) The block generation/distribution unit 1561 of the leader terminal 202 generates a block including the SC execution Tx of the SC-2 and the verification Tx of the verification SC collectively, and distributes the block to the peer of each node terminal 201 of the BC management system 200.

(18-11) The Tx/block transmission/reception unit 1522 of the peer of each node terminal 201 of the node group 1 passes the SCID of the SC-2 to the extended agreement policy reference/verification unit 1523, and acquires the extended agreement policy of the SC-2. The Tx/block transmission/reception unit 1522 of the peer of each node terminal 201 of the node group 1 verifies whether or not the SC execution Tx of the SC-2 satisfies the acquired extended agreement policy of the SC-2 together with the verification Tx of the verification SC. Here, the Tx/block transmission/reception unit 1522 of the peer of each node terminal 201 of the node group 1 determines that the SC execution Tx of the SC-2 satisfies the acquired extended agreement policy of the SC-2 together with the verification Tx of the verification SC.

The Tx/block transmission/reception unit 1542 of the peer of each node terminal 201 of the node group 2 passes the SCID of the SC-2 to the extended agreement policy reference/verification unit 1543, and acquires the extended agreement policy of the SC-2. The Tx/block transmission/reception unit 1542 of the peer of each node terminal 201 of the node group 2 verifies whether or not the SC execution Tx of the SC-2 satisfies the acquired extended agreement policy of the SC-2 together with the verification Tx of the verification SC. Here, the Tx/block transmission/reception unit 1542 of the peer of each node terminal 201 of the node group 2 determines that the SC execution Tx of the SC-2 satisfies the acquired extended agreement policy of the SC-2 together with the verification Tx of the verification SC.

(18-12) The Tx/block transmission/reception unit 1522 of the peer of each node terminal 201 of the node group 1 registers the SC execution Tx of the SC-2 and the verification Tx of the verification SC collectively in the BC 1525 and the WS 1524.

The Tx/block transmission/reception unit 1542 of the peer of each node terminal 201 of the node group 2 registers the SC execution Tx of the SC-2 and the verification Tx of the verification SC collectively in the BC 1545 and the WS 1544.

With this configuration, the BC management system 200 may enable verification of the order of the execution of the SCs at each node terminal 201 of each node group without sharing the SCs among the node groups in which different SCs are deployed, and may update the BC in a case where the order of the execution of the SCs is guaranteed.

### (Deployment Processing Procedure)

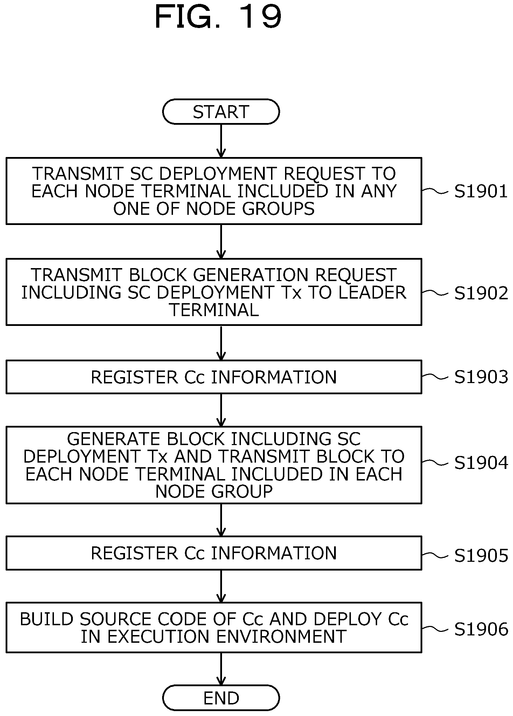

Next, an example of a deployment processing procedure executed by the BC management system 200 will be described with reference to FIG. 19.

FIG. 19 is a flowchart illustrating an example of the deployment processing procedure. In FIG. 19, the execution terminal 203 transmits an SC deployment request to each node terminal 201 included in any one of the node groups by the request transmission/reception unit 1570 (Step S1901).

When receiving the SC deployment request by the Cc deployment units 1521 and 1541, the peer of the node terminal 201 generates a SC deployment Tx, and transmits a block generation request including the SC deployment Tx to the leader terminal 202 (Step S1902).

When receiving the block generation request by the block generation/distribution unit 1561, the leader terminal 202 registers Cc information in the BC 1564 and the agreement policy reference table 500 of the WS 1563 (Step S1903). Next, the leader terminal 202 generates a block including the SC deployment Tx by the block generation/distribution unit 1561, and transmits the block to each node terminal 201 included in each node group (Step S1904).

When receiving the block including the SC deployment Tx by the Tx/block transmission/reception units 1522 and 1542, the peer or the node terminal 201 registers the Cc information in the BCs 1525 and 1545 and the WSs 1524 and 1544 (Step S1905). Next, the peer of the node terminal 201 builds a source code of a Cc by the Cc deployment units 1521 and 1541 and deploys the Cc in an execution environment (Step S1906). Then, the BC management system 200 ends the deployment processing.

### (Verification Processing Procedure)

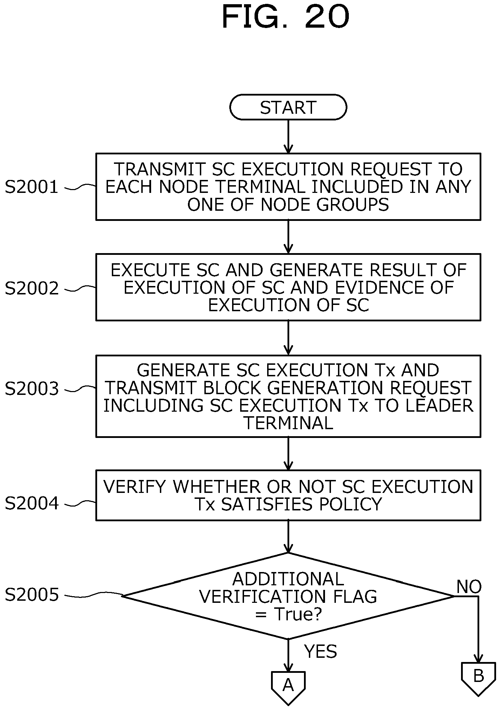

Next, an example of a verification processing procedure executed by the BC management system 200 will be described with reference to FIGs. 20 to 22.

FIGs. 20 to 22 are flowcharts illustrating an example of the verification processing procedure. In FIG. 20, the execution terminal 203 transmits an SC execution request to each node terminal 201 included in any one of the node groups by the request transmission/reception unit 1570 (Step S2001).

When receiving the SC execution request by the Tx/block transmission/reception units 1522 and 1542, the peer of the node terminal 201 executes a SC and generates a result of the execution of the SC and evidence of the execution of the SC (Step S2002). Next, by the Tx/block transmission/reception units 1522 and 1542, the peer of the node terminal 201 generates a SC execution Tx including the result of the execution of the SC and the evidence of the execution of the SC, and transmits a block generation request including the SC execution Tx to the leader terminal 202 (Step S2003).

When receiving the block generation request by the block generation/distribution unit 1561, the leader terminal 202 verifies, with reference to the extended agreement policy, whether or not the SC execution Tx satisfies the policy (Step S2004). Next, the leader terminal 202 determines, by the block generation/distribution unit 1561, whether or not the additional verification flag of the extended agreement policy is True (Step S2005).

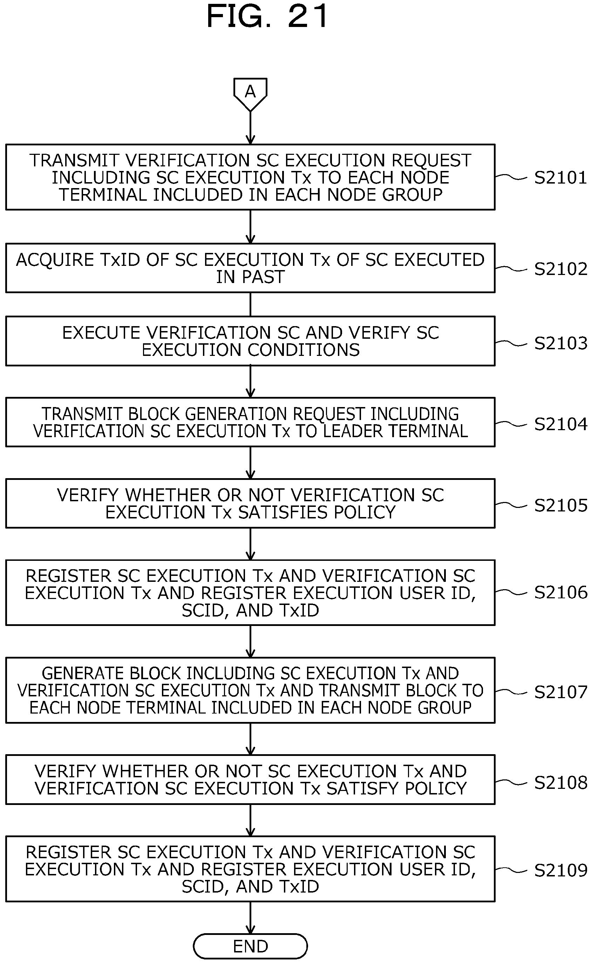

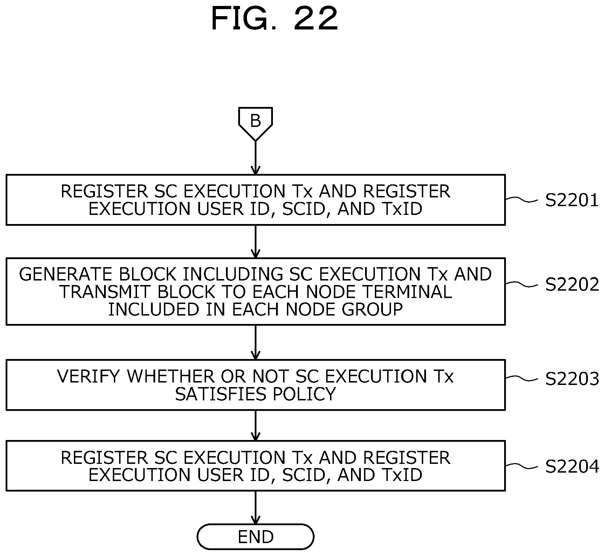

Here, in a case where the additional verification flag is True (Step S2005: Yes), the leader terminal 202 proceeds to processing of Step S2101 of FIG. 21. On the other hand, in a case where the additional verification flag is not True (Step S2005: No), the leader terminal 202 proceeds to processing of Step S2201 of FIG. 22.

In FIG. 21, the leader terminal 202 transmits, by the block generation/distribution unit 1561, a verification SC execution request including the SC execution Tx to each node terminal 201 included in each node group (Step S2101).

When receiving the verification SC execution request by the Tx/block transmission/reception units 1522 and 1542, the peer of the node terminal 201 acquires a TxID of a SC execution Tx of a SC executed in the past (Step S2102). The SC executed in the past is a SC related to SC execution conditions of the SC executed this time (SC executed in Step S2002). Specifically, the SC executed in the past is an SC whose order with the SC executed this time is desired to be verified. Next, the peer of the node terminal 201 executes the verification SC on the basis of the acquired TxID of the SC execution Tx of the SC executed in the past by the Tx execution/generation units 1526 and 1546 of the verification SC, and verifies the SC execution conditions (Step S2103). Then, by the Tx/block transmission/reception units 1522 and 1542, the peer of the node terminal 201 generates a verification SC execution Tx, and transmits a block generation request including the verification SC execution Tx to the leader terminal 202 (Step S2104).

By the block generation/distribution unit 1561, the leader terminal 202 verifies, with reference to the extended agreement policy, whether or not the verification SC execution Tx satisfies the policy (Step S2105). Next, by the block generation/distribution unit 1561, the leader terminal 202 registers the SC execution Tx of the SC executed this time and the verification SC execution Tx in the BC 1564 and the WS 1563. Furthermore, by the block generation/distribution unit 1561, the leader terminal 202 registers the execution user ID, the SCID, and the TxID in the evidence reference table 600 of the WS 1563 (Step S2106). Then, by the block generation/distribution unit 1561, the leader terminal 202 generates a block including the SC execution Tx of the SC executed this time and the verification SC execution Tx, and transmits the block to each node terminal 201 included in each node group (Step S2107).

By the Tx/block transmission/reception units 1522 and 1542, the peer of the node terminal 201 verifies, with reference to the extended agreement policy, whether or not the SC execution Tx of the SC executed this time and the verification SC execution Tx satisfy the policy (Step S2108). Next, by the Tx/block transmission/reception units 1522 and 1542, the peer of the node terminal 201 registers the SC execution Tx of the SC executed this time and the verification SC execution Tx in the BCs 1525 and 1545 and the WSs 1524 and 1544. Furthermore, by the Tx/block transmission/reception units 1522 and 1542, the peer of the node terminal 201 registers the execution user ID, the SCID, and the TxID in the evidence reference table 600 of the WSs 1524 and 1544 (Step S2109). Then, the BC management system 200 ends the verification processing.

In FIG. 22, by the block generation/distribution unit 1561, the leader terminal 202 registers the SC execution Tx of the SC executed this time in the BC 1564 and the WS 1563. Furthermore, by the block generation/distribution unit 1561, the leader terminal 202 registers the execution user ID, the SCID, and the TxID in the evidence reference table 600 of the WS 1563 (Step S2201). Next, by the block generation/distribution unit 1561, the leader terminal 202 generates a block including the SC execution Tx of the SC executed this time, and transmits the block to each node terminal 201 included in each node group (Step S2202).

By the Tx/block transmission/reception units 1522 and 1542, the peer of the node terminal 201 verifies, with reference to the extended agreement policy, whether or not the SC execution Tx of the SC executed this time satisfies the policy (Step S2203). Next, by the Tx/block transmission/reception units 1522 and 1542, the peer of the node terminal 201 registers the SC execution Tx of the SC executed this time in the BCs 1525 and 1545 and the WSs 1524 and 1544. Furthermore, by the Tx/block transmission/reception units 1522 and 1542, the peer of the node terminal 201 registers the execution user ID, the SCID, and the TxID in the evidence reference table 600 of the WSs 1524 and 1544 (Step S2204). Then, the BC management system 200 ends the verification processing.

As described above, in the BC network 100 including the first node 110 and the second node 120, according to the first node 110, the logic 111 of the first processing may be stored. According to the second node 120, it is possible not to store the logic 111 of the first processing. According to the first node 110, the first processing may be executed on the basis of the logic 111 of the first processing. According to the first node 110, when the first processing is executed, a block including information indicating that the first processing has been executed may be recorded in a blockchain managed by the BC network 100. With this configuration, the first node 110 may enable the second node 120 to confirm the information indicating that the first processing has been executed without sharing the logic 111 of the first processing with the second node 120. Therefore, when the second node 120 executes the second processing on the basis of the logic 121 of the second processing, the first node 110 may enable verification of order of the first processing and the second processing at the second node 120.

Moreover, in the BC network 100 including the third node that generates a block, according to each node, a blockchain may be stored in common. According to the first node 110, when the first processing is executed, the information indicating that the first processing has been executed may be transmitted to the third node. According to the third node, a block including the received information indicating that the first processing has been executed may be generated and distributed to each of other nodes included in the BC network 100. According to each of the other nodes, the block including the information indicating that the first processing has been executed, which is distributed from the third node, is received and recorded in the blockchain stored in the own node. With this configuration, the first node 110 may control the BC network 100 so that the block including the information indicating that the first processing has been executed is recorded in the blockchain stored in common in each node.

According to the second node 120, the logic 121 of the second processing executed after the first processing may be stored. According to the second node 120, the second processing may be executed on the basis of the logic 121 of the second processing. According to the second node 120, only in a case where the first processing has already been executed when the second processing is executed, a block including information indicating a result of executing the second processing may be recorded in a blockchain. With this configuration, the second node 120 may guarantee the order of the first processing and the second processing.

Moreover, in the BC network 100 including the third node that generates a block, according to each node, a blockchain may be stored in common. According to the second node 120, when the second processing is executed, the information indicating the result of executing the second processing may be transmitted to the third node. According to the third node, a block including the received information indicating the result of executing the second processing may be generated and distributed to each of other nodes included in the BC network 100. According to each of the other nodes, the block including the information indicating the result of executing the second processing, which is distributed from the third node, may be received and recorded in the blockchain stored in the own node. With this configuration, the third node may update the blockchain stored in each of the other nodes so as to have the same content.

According to the third node, when receiving the information indicating the result of executing the second processing, a request for determining whether or not the first processing has already been executed may be distributed to each of the other nodes included in the BC network 100. According to each of the other nodes, when receiving the request, information indicating a result of determining whether or not the first processing has already been executed may be transmitted to the third node. According to the third node, on the basis of the information indicating the result of determining whether or not the first processing has already been executed, which is received from each of the other nodes, whether or not to generate the block including the information indicating the result of executing the second processing may be determined. According to the third node, in a case where it is determined to generate the block, the block including the information indicating the result of executing the second processing may be generated and distributed to each of the other nodes included in the BC network 100. With this configuration, the third node may determine whether or not to generate the block on the basis of a result of verifying the order of the first processing and the second processing. The third node may record the generated block in the blockchain stored in each of the other nodes so as to guarantee the order of the first processing and the second processing.

According to the first node 110, the logic 111 of the first processing related to a transaction may be stored. According to the second node 120, the logic 121 of the second processing related to the transaction, which is executed after the first processing, may be stored. With this configuration, the first node 110 may execute the first processing related to the transaction. The second node 120 may execute the second processing related to the transaction.

According to the first node 110, logic indicating a procedure of the first processing may be stored. According to the second node 120, logic indicating a procedure of the second processing executed after the first processing may be stored. With this configuration, the first node 110 may grasp the procedure of the first processing and execute the first processing. The second node 120 may grasp the procedure of the second processing and execute the second processing.

According to the first node 110, when the first processing is executed, the block including the information indicating that the first processing has been executed in a data format interpretable by each node included in the BC network 100 may be recorded in the blockchain. With this configuration, the first node 110 may make the information indicating that the first processing has been executed interpretable by the second node 120.

Note that the control method described in the present embodiment may be implemented by executing a program prepared in advance, on a computer such as a PC or a workstation. The control program described in the present embodiment is executed by being recorded on a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the control program described in the present embodiment may be distributed via a network such as the Internet.

### CITATION LIST

### PATENT DOCUMENT

Patent Document 1: Japanese Laid-open Patent Publication No. 2018-128723

### REFERENCE SIGNS LIST

100 Blockchain network
110, 120 Node
111, 121 Logic
112, 122, 204, 1010, 1020, 1525, 1545, 1564 Blockchain
200 Blockchain management system
201 Node terminal
202 Leader terminal
203 Execution terminal
210 Network
220 Blockchain infrastructure
300, 700, 800 Bus
301, 701, 801 CPU
302, 702, 802 Memory
303, 703, 803 Network I/F
304, 704, 804Recording medium I/F
305, 705, 805 Recording medium
400 Evidence data
500 Agreement policy reference table
600 Evidence reference table
806 Display
807 Input device
900, 910 Storage unit
901, 911 Acquisition unit
902 Processing unit
903, 912 Verification unit
904, 914 Recording unit
905, 915 Output unit
913 Generation unit
1001, 1201 Node controller
1002, 1202 Peer
1210 Internal DB
1511, 1531 Transaction management unit
1512, 1532, 1552 Extended agreement policy management unit
1513, 1533 WorldState/blockchain management unit
1514, 1515, 1534, 1535 Chaincode
1521, 1541 Chaincode deployment unit
1522, 1542 Transaction/block transmission/reception unit
1523, 1543, 1562 Extended agreement policy reference/verification unit
1524, 1544, 1563 WorldState
1526, 1528, 1546, 1548 Transaction execution/generation unit
1527, 1547 Event area reference unit
1529 Event area storage unit
1551 Transaction/block communication unit
1553 WorldState/blockchain communication unit
1561 Block generation/distribution unit
1570 Request transmission/reception unit

## Claims

1. A control method implemented by a first node in a blockchain network, the blockchain network including the first node that stores logic of processing and a second node that does not store the logic of the processing, the control method comprising:
executing the processing on the basis of the logic of the processing; and
when the processing is executed, recording, in a blockchain managed by the blockchain network, a block that includes information that indicates that the processing has been executed.

2. The control method according to claim 1, wherein
the blockchain network includes a third node that generates a block,
the blockchain is stored in common to at least each node included in the blockchain network other than the third node,
the first node
transmits, when the processing is executed, the information that indicates that the processing has been executed to the third node,
the third node
generates the block that includes the received information that indicates that the processing has been executed, and distribute the block to each of other nodes included in the blockchain network, and
each of the other nodes
receives the block that includes the information that indicates that the processing has been executed, which is distributed from the third node, and records the block in the blockchain stored in the own node.

3. The control method according to claim 1 or 2, wherein
the second node
stores logic of another processing executed after the processing,
executes the another processing on the basis of the logic of the another processing, and
records, only in a case where the processing has already been executed when the another processing is executed, a block that includes information that indicates a result of executing the another processing in the blockchain.

4. The control method according to claim 3, wherein
the blockchain network includes a third node that generates a block,
the blockchain is stored in common to at least each node included in the blockchain network other than the third node,
the second node
transmits, when the another processing is executed, the information that indicates the result of executing the another processing to the third node,
the third node
generates the block that includes the received information that indicates the result of executing the another processing, and distributes the block to each of the other nodes included in the blockchain network, and
each of the other nodes
receives the block that includes the information that indicates the result of executing the another processing, which is distributed from the third node, and records the block in the blockchain stored in the own node.

5. The control method according to claim 4, wherein
the third node
distributes, when the information that indicates the result of executing the another processing is received, a request to determine whether or not the processing has already been executed to each of the other nodes included in the blockchain network,
each of the other nodes
transmits, when the request is received, information that indicates a result of determining whether or not the processing has already been executed to the third node, and
the third node
determines whether or not to generate the block that includes the information that indicates the result of executing the another processing on the basis of the information that is received from each of the other nodes and indicates the result of determining whether or not the processing has already been executed, and
in a case where it is determined to generate the block, generates the block that includes the information that indicates the result of executing the another processing, and distributes the block to each of the other nodes included in the blockchain network.

6. The control method according to any one of claims 1 to 5, wherein
the first node stores logic of processing related to a transaction, and
the second node stores logic of another processing related to the transaction, which is executed after the processing.

7. The control method according to any one of claims 1 to 6, wherein
the first node stores logic that indicates a procedure of the processing, and
the second node stores logic that indicates a procedure of the another processing executed after the processing.

8. The control method according to any one of claims 1 to 7, wherein the first node
records, when the processing is executed, a block that includes the information that indicates that the processing has been executed in a data format interpretable by each node included in the blockchain network, in the blockchain.

9. A control program for causing a first node included in a blockchain network to perform steps, the blockchain network including the first node that stores logic of processing and a second node that does not store the logic of the processing, the sptes comprising:
executing the processing on the basis of the logic of the processing; and
recording, by the first node, when the processing is executed, a block that includes information that indicates that the processing has been executed in a blockchain managed by the blockchain network.

10. A control apparatus operable as a first node included in a blockchain network, the blockchain network including the first node that stores logic of first processing and a second node that does not store the logic of the firt processing, the control apparatus comprising a control unit, the control unit being configured to:
execute the processing on the basis of the logic of the processing; and
when the processing is executed, record, in a blockchain managed by the blockchain network, a block that includes information that indicates that the processing has been executed.
